# EUROPEAN PATENT APPLICATION

(11) **EP 3 232 673 A1**
(43) Date of publication of application: **18.10.2017**
(21) Application number: 15867220.4
(22) Date of filing: 28.09.2015
(51) Int. Cl.: H04N 21/238, H04N 21/236

(54) **TRANSMITTING DEVICE AND TRANSMITTING METHOD, AND RECEIVING DEVICE AND RECEIVING METHOD**

(30) Priority: 10.12.2014 JP 2014250279
(71) Applicant: Sony Corporation, Tokyo 108-0075 (JP)
(72) Inventor: KITAZATO, Naohisa, Tokyo 108-0075 (JP)
(74) Representative: Witte, Weller & Partner Patentanwälte mbB
(86) International application number: PCT/JP2015/077363
(87) International publication number: WO 2016/092937

(57) **Abstract**

Components that form a broadcast service are transmitted in transmission units based on a predetermined transport scheme. An MPU serving as a transmission unit for a data broadcasting application is configured for each group of MFUs corresponding to file data that forms a presentation unit PU of a data broadcasting application. A broadcasting station disposes a mapping descriptor for mapping from a PU to an MPU in a PU information area for each presentation unit PU that forms data content in a data content management table transmitted via a data transmission mess age to notify that the MPU is positioned in the PU.

## Description

### TECHNICAL FIELD

The technology disclosed in the present specification relates to a transmitting device and method and a receiving device and method for transmitting data made up of predetermined transmission units according to a predetermined transport scheme. More particularly, the present technology relates to a transmitting device and method and a receiving device and method for converting components that form a broadcast service to a media processing unit (MPU) format and transmitting broadcast data according to an MPEG Media Transport (MMT) scheme.

### BACKGROUND ART

In current broadcasting systems, an Moving Picture Experts Group-2 Transport Stream (MPEG-2 TS) scheme and a Real Time Protocol (RTP) scheme are broadly used as a media transport scheme (for example, see Patent Document 1). Moreover, ultra-high definition TV broadcasting standards based on an MPEG Media Transport (MMT) scheme standardized as new MPEG media transport scheme are discussed as a next-generation digital broadcasting scheme. The MMT scheme makes it easy to use different transmission paths in combination and can be used commonly for a plurality of transmission paths for broadcasting and communication.

A broadcast signal of one service (channel: broadcast program) includes timed media associated with a main part of a broadcast program such as video, audio, and caption and non-timed media such as file data used in data broadcasting linked to the broadcast program. In a broadcasting system which uses the MMT scheme, media data obtained by coding these media is converted to an MMT protocol (MMTP) packet according to the format of a transmission unit called an MPU and the MMTP packet is transmitted by carrying the same on Internet protocol (IP) packets. Moreover, these IP packets are transmitted according to the format of type value length (TLV) packets in a broadcast transmission path (for example, see Patent Document 2).

### CITATION LIST

### PATENT DOCUMENT

Patent Document 1: Japanese Patent Application Laid-Open No. 2013-153291
Patent Document 2: Japanese Patent Application Laid-Open No. 2014-204384

### SUMMARY OF THE INVENTION

### PROBLEMS TO BE SOLVED BY THE INVENTION

An object of the technology disclosed in the present specification is to provide an excellent transmitting device and method and an excellent receiving device and method capable of ideally transmitting components that form a broadcast service in transmission units based on a predetermined transport scheme.

### SOLUTIONS TO PROBLEMS

The technology disclosed in the present specification has been made considering the problem, and a first aspect thereof is a transmitting device including:
a transmitting unit that transmits components that form a broadcast service in transmission units based on a predetermined transport scheme; and
an information transmitting unit that transmits control information related to transmission of the components, wherein
the transmitting unit transmits files that form a data broadcasting application by grouping the files into the transmission units based on the predetermined transport scheme, and
the information transmitting unit transmits control information including a table that indicates positioning of the transmission units in the data broadcasting application.

According to a second aspect of the technology disclosed in the present specification, in the transmitting device according to the first aspect, the predetermined transport scheme is MMT.

According to a third aspect of the technology disclosed in the present specification, the transmitting unit of the transmitting device according to the first aspect transmits the files that form the data broadcasting application using the transmission units grouped on the basis of presentation units, and the information transmitting unit transmits control information including a table that indicates a correlation between the transmission units and the presentation units of the data broadcasting application.

According to a fourth aspect of the technology disclosed in the present specification, the information transmitting unit of the transmitting device according to the third aspect stores and transmits a descriptor that correlates the presentation units with the transmission units in a first table that indicates information on the presentation units of the data broadcasting application.

According to a fifth aspect of the technology disclosed in the present specification, the information transmitting unit of the transmitting device according to the third aspect stores and transmits a descriptor that correlates the transmission units with the presentation units in a second table that indicates information on transmission units for transmitting the components.

According to a sixth aspect of the technology disclosed in the present specification, files that form the data broadcasting application have a directory structure. Moreover, the transmitting unit of the transmitting device according to the first aspect transmits the files that form the data broadcasting application using the transmission units grouped on the basis of the directory structure, and the information transmitting unit transmits control information including a table that indicates a correlation between the transmission units and the directory structure.

According to a seventh aspect of the technology disclosed in the present specification, the information transmitting unit of the transmitting device according to the sixth aspect stores and transmits a descriptor that correlates the transmission units with the directory structure in a second table that indicates information on the transmission units for transmitting the components.

Furthermore, an eighth aspect of the technology disclosed in the present specification is a transmitting method including:
a transmitting step of transmitting components that form a broadcast service in transmission units based on a predetermined transport scheme; and
an information transmitting step of transmitting control information related to transmission of the components, wherein
the transmitting step involves transmitting files that form a data broadcasting application by grouping the files into the transmission units based on the predetermined transport scheme, and
the information transmitting step involves transmitting the control information including a table that indicates positioning of the transmission units in the data broadcasting application.

Furthermore, a ninth aspect of the technology disclosed in the present specification is a receiving device including:
a receiving unit that receives components that form a broadcast service using transmission units based on a predetermined transport scheme; and
an information receiving unit that receives control information related to transmission of the components, wherein
the receiving unit receives files that form a data broadcasting application using transmission units grouped on the basis of the predetermined transport scheme, and
the information receiving unit receives control information including a table that indicates positioning of the transmission units in the data broadcasting application.

Furthermore, a tenth aspect of the technology disclosed in the present specification is a receiving method including:
a receiving step of receiving components that form a broadcast service using transmission units based on a predetermined transport scheme; and
an information receiving step of receiving control information related to transmission of the components, wherein
the receiving step involves receiving files that form a data broadcasting application using transmission units grouped on the basis of the predetermined transport scheme, and
the information receiving step involves receiving control information including a table that indicates positioning of the transmission units in the data broadcasting application.

### EFFECTS OF THE INVENTION

According to the technology disclosed in the present specification, it is possible to provide an excellent transmitting device and method and an excellent receiving device and method capable of ideally transmitting components that form a broadcast service in transmission units based on a predetermined transport scheme.

According to the broadcasting system which employs the technology disclosed in the present specification, the transmission units (MPUs) of a data broadcasting application can be positioned in the presentation units or the production units of the data broadcasting application. Due to this, it is possible to operate a broadcast service efficiently.

Note that the effects described in the present specification are merely examples, and the effects of the present technology are not limited to them. Moreover, the present technology may provide additional effects in addition to the above-described effects.

Other objects, features, and advantages of the technology disclosed in the present specification will become apparent from the following detailed description based on embodiments to be described later and the accompanying drawings.

### BRIEF DESCRIPTION OF DRAWINGS

Fig. 1 is a diagram schematically illustrating a configuration example of a digital broadcasting system 10 which employs the technology disclosed in the present specification.
Fig. 2 is a diagram illustrating a protocol stack 200 of a broadcasting system which uses an MMT scheme.
Fig. 3 is a diagram illustrating a configuration example of a broadcast transmission system 11 that transmits a broadcast signal illustrated in Fig. 2.
Fig. 4 is a diagram illustrating a configuration example of a receiver 12 that receives the broadcast signal illustrated in Fig. 2.
Fig. 5 is a diagram illustrating an image of a broadcast signal 500 transmitted from the broadcast transmission system 11 to a broadcast transmission path according to an MMT/TLV scheme.
Fig. 6 is a diagram illustrating a syntax example of an MMTP packet 600.
Fig. 7 is a diagram illustrating a syntax example of an extension header 700 of an MMTP packet that transmits non-timed media.
Fig. 8 is a diagram illustrating a syntax example of an MMTP payload 800 in the case of an MPU mode.
Fig. 9 is a diagram illustrating a syntax example 900 of DU_Header stored in the MMTP payload 800 in which timed media are arranged.
Fig. 10 is a diagram illustrating a syntax example 1000 of DU_Header stored in the MMTP payload 800 in which non-timed media are arranged.
Figs. 11(A) to 11(F) are diagrams for describing a method of forming a packet transmitted according to an MMT scheme.
Fig. 12 is a diagram illustrating a mechanism for designating each asset of a package from an MP table in a PA message.
Fig. 13 is a diagram illustrating a syntax example of a PAmessage 1301 and an MP table 1302 included in the PAmessage 1301.
Fig. 14 is a diagram illustrating a syntax example 1400 of the PA message.
Fig. 15 is a diagram illustrating the description of parameters included in the PA message.
Fig. 16 is a diagram illustrating a syntax example 1600 of the MP table.
Fig. 17 is a diagram illustrating the description of parameters included in the MP table.
Fig. 18 is a diagram illustrating a data structure example 1800 of MMT_general_location_info (general location information).
Fig. 19 is a diagram illustrating a syntax example 1900 of an M2 section message.
Fig. 20 is a diagram illustrating a syntax example 2000 of an MH Application Information (AI) table (MH AIT).
Fig. 21 is a diagram illustrating a syntax example 2100 of an application information descriptor.
Fig. 22 is a diagram illustrating a syntax example 2100 of a transmission protocol descriptor.
Fig. 23 is a diagram illustrating a syntax example 2300 of a selector byte common to HTTP/HTTPS and MMT non-timed transmission.
Fig. 24 is a diagram illustrating a syntax example 2400 of a data transmission message.
Fig. 25 is a diagram illustrating a syntax example 2500 of a data directory management table (DDMT).
Fig. 26 is a diagram illustrating a syntax example 2600 of a data asset management table (DAMT).
Fig. 27 is a diagram illustrating a syntax example 2700 of a data content management table (DCCT).
Fig. 28 is a diagram for describing a mechanism for acquiring files that form a data broadcasting application transmitted according to an MMT scheme.
Fig. 29(A) to 29(C) are diagrams for describing a mechanism for transmitting a data broadcasting application transmitted according to an MMT scheme and presenting a location (illustrating a case in which an MPU is positioned in a PU).
Figs. 30(A) and 30(B) are diagrams for describing a correlation between transmission of a data broadcasting application transmitted according to an MMT scheme and a presentation unit of applications (illustrating a case in which an MPU is positioned in a PU).
Fig. 31 is a diagram illustrating a syntax example 3100 of a PU-to-MPU mapping descriptor.
Fig. 32 is a diagram for describing a reference relation between tables transmitted as signaling information when a data broadcasting application is acquired from a data asset (illustrating a case in which an MPU is positioned in a PU) .
Fig. 33 is a diagram illustrating syntax examples 3301 and 3302 of a PU information descriptor and a linked PU information descriptor.
Fig. 34 is a diagram for describing a reference relation between tables transmitted as signaling information when a data broadcasting application is acquired from a data asset (illustrating a case in which an MPU is positioned in a PU).
Figs. 35(A) and 35(B) are diagrams illustrating a correlation between transmission of a data broadcasting application (contents) transmitted according to an MMT scheme and a directory structure of contents (illustrating a case in which an MPU is positioned in a directory structure).
Fig. 36 is a diagram illustrating a syntax example 3600 of an MPU node descriptor (MPU_node_descriptor).
Fig. 37 is a diagram for describing a reference relation between signaling tables transmitted as signaling information when a data broadcasting application is acquired from a data asset (illustrating a case in which an MPU is positioned in a directory structure).

### MODE FOR CARRYING OUT THE INVENTION

Hereinafter, embodiments of the technology disclosed in the present specification will be described in detail with reference to the drawings.

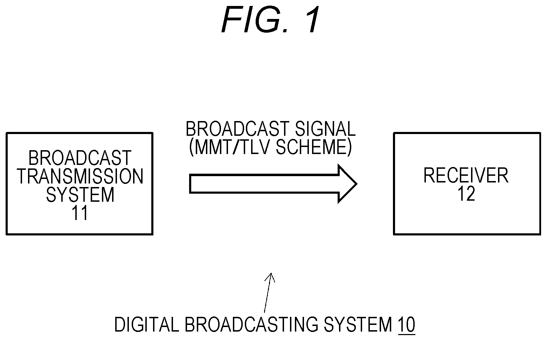

Fig. 1 schematically illustrates a configuration example of a digital broadcasting system 10 which employs the technology disclosed in the present specification. The digital broadcasting system 10 includes a broadcast transmission system 11 and a receiver 12.

The broadcast transmission system 11 transmits broadcast signals according to an MMT scheme and transmits each component that forms a broadcast service via IP packets. Specifically, the symbols of video and audio signals of a broadcast program and the signals of contents (a data broadcasting application and the like) and caption associated with the broadcast program are carried on an MMTP payload and converted to MMTP packets and are transmitted via IP packets. Moreover, these IP packets are transmitted according to a TLV packet format in a broadcast transmission path. Here, components associated with a main part of the broadcast program such as video, audio, and caption are timed media. Moreover, contents (a data broadcasting application and the like described according to a hyper text transfer protocol (HTML)) used in data broadcasting are non-timed media.

On the other hand, the receiver 12 receives IP packets transmitted from the broadcast transmission system 11 via the broadcast transmission path. Moreover, the receiver 12 decodes transmission media such as video, audio, and caption from the received packets to present images and audio. Furthermore, upon acquiring respective pieces of data broadcasting file data from the received packets, the receiver 12 activates an application engine such as a HTML browser to present data broadcasting linked to the broadcast program.

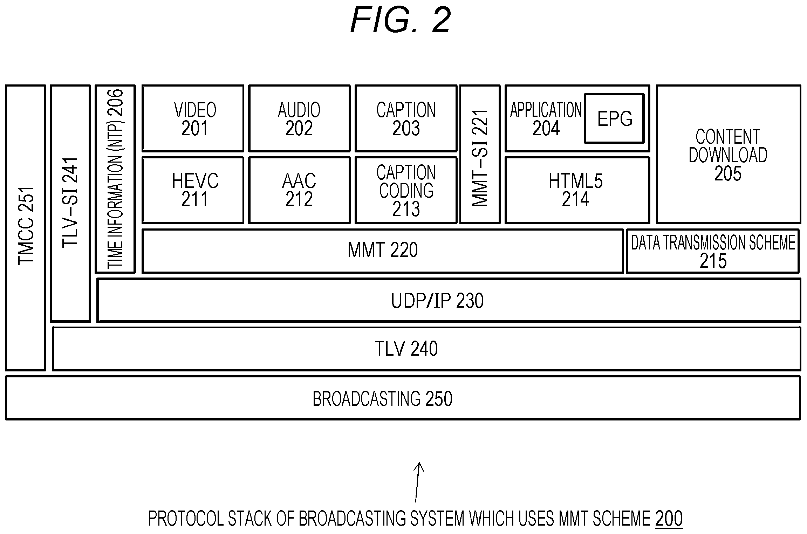

Fig. 2 illustrates a protocol stack 200 of a broadcasting system which uses an MMT scheme.

One broadcast service includes components of video 201, audio 202, caption 203, application 204, and content download 205. The video 201 is coded (211) according to a high efficiency video coding (HEVC) format, the audio 202 is coded (212) according to an advanced audio coding (AAC) format, and the caption 203 is caption-coded (213). Moreover, although the application 204 includes an electric program guide (EPG), the application 204 is coded (214) according to a HTML5 format.

On an MMT layer 220, the coded components 211 to 214 of these timed and non-timed media are converted according to an MPU format and are carried on an MMTP payload and converted to MMTP packets. Moreover, MMT-signaling information (SI) 221 which is control information (which indicates a configuration or the like of the broadcast program) which is associated with an MMT which is a media transport scheme is also carried on the MMTP payload and converted to MMTP packets. Note that four methods, a caption and character super transmission scheme; an application transmission scheme; an event and message transmission scheme; and a general data transmission scheme can be used as a data transmission scheme 215 of the content download 205, and the detailed description thereof will be omitted.

MMTP packets are converted to IP packets on a user datagram protocol (UDP)/IP layer 230. Moreover, a network timeprotocol (NTP) packet 206 including information on current time for timed media is also converted to IP packets. Furthermore, these IP packets are converted to TLV packets on a TLV layer 240 and are transmitted via a broadcast transmission path 250 which is a lowermost physical layer. Moreover, TLV-SI 241 associated with a TLV multiplexing format for multiplexing IP packets is converted to TLV packets and transmitted via the broadcast transmission path 250. Transmission slots obtained by multiplexing TLV packets are specified using TLV stream identification information (TLV_stream_id) from a Transmission and Multiplexing Configuration Control (TMCC) signal 251 of the transmission path.

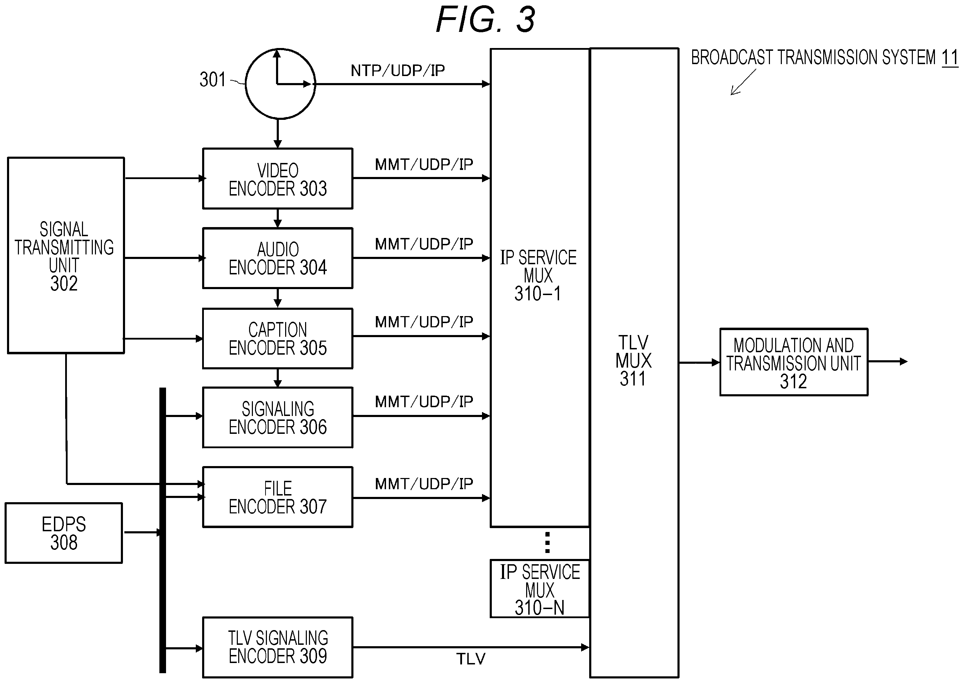

Fig. 3 illustrates a configuration example of the broadcast transmission system 11 that transmits the broadcast signal illustrated in Fig. 2. The broadcast transmission system 11 corresponds to a key station (a program production station) which is a production source of a main part of a broadcast program, for example. The broadcast transmission system 11 includes a clock unit 301, a signal transmitting unit 302, a video encoder 303, an audio encoder 304, a caption encoder 305, a signaling encoder 306, a file encoder 307, an Electronic Data Processing System (EDPS) 308, a TLV signaling encoder 309, an IP service multiplexer (MUX) 310, a TLV multiplexer (MUX) 311, and a modulation and transmission unit 312.

The clock unit 301 generates time information synchronized with the time information acquired from an NTP server (not illustrated) and transmits an IP packet including the time information to the IP service multiplexer 310.

The signal transmitting unit 302 is a studio of a TV broadcasting station or a recording and reproduction apparatus such as a VTR, for example, and transmits stream data such as video, audio, and caption which are timed media and file data (HTML document data or the like) for a data broadcasting application, which is non-timed media to the video encoder 303, the audio encoder 304, the caption encoder 305, and the file encoder 307, respectively.

The EDPS 308 is a scheduler of the TVbroadcasting station and a file supply source and transmits a data broadcasting application which is non-timed media, control information indicating a configuration or the like of the broadcast program, and control information related to multiplexing of IP packets to the file encoder 307, the signaling encoder 306, and the TLV signaling encoder 309, respectively.

The video encoder 303 codes a video signal transmitted from the signal transmitting unit 302 according to the HEVC format, packetizes the coded video signal to obtain an MMT packet of the video signal, and transmits an IP packet including the MMT packet to the IP service multiplexer 310. Moreover, the audio encoder 304 codes an audio signal transmitted from the signal transmitting unit 302 according to the AAC format, packetizes the coded audio signal to obtain an MMT packet of the audio signal, and transmits an IP packet including the MMT packet to the IP service multiplexer 310. Moreover, the caption encoder 305 caption-codes caption signals transmitted from the signal transmitting unit 302, packetizes the coded caption signals to obtain an MMT packet of the caption, and transmits an IP packet including the MMT packet to the IP service multiplexer 310.

The signaling encoder 306 generates a signaling message (MMT-SI) that describes the control information indicating a configuration or the like of the broadcast program on the basis of the information transmitted from the EDPS 308 and transmits an IP packet including an MMT packet in which the signaling message is disposed in a payload portion to the IP service multiplexer 310. In the present embodiment, the signaling message is roughly subdivided into the three messages: a package access (PA) message; an M2 section message; and a data transmission message.

The file encoder 307 codes the data broadcasting application transmitted from the signal transmitting unit 302 or the EDPS 308 to obtain file data of the HTML5 format, packetizes the coded data broadcasting application to obtain an MMT packet, and transmits an IP packet including the MMT packet to the IP service multiplexer 310.

The broadcast transmission system 11 is provided with the IP service multiplexer 310 for each transmission channel (broadcast program). The IP service multiplexer 310 of one channel multiplexes the IP packets including the video, audio, caption, signaling message (MMT-SI), and data broadcasting application transmitted from the encoders 303 to 307 to generate TLVpackets that form one broadcast service (channel).

The TLV signaling encoder 309 generates a TLV packet in which the control information (TLV-SI) related to multiplexing of the IP packet is disposed in a payload portion thereof on the basis of the information transmitted from the EDPS 308.

The TLV multiplexer 311 multiplexes the TLV packets generated by the IP service multiplexers 310-1 to 310-N and the TLV signaling encoder 309 to generate a TLV stream identified by the TLV stream identification information.

The modulation and transmission unit 312 performs RF modulation on the TLV stream generated by the TLV multiplexer 311 and transmits the modulated TLV stream to the broadcast transmission path.

The operation of the broadcast transmission system 11 illustrated in Fig. 3 will be described.

In the clock unit 301, time information synchronized with the time information acquired from the NTP server (not illustrated) and an IP packet including the time information is generated.

The video signal transmitted from the signal transmitting unit 302 is supplied to the video encoder 303. In the video encoder 303, the video signal is coded according to the HEVC format and is packetized to obtain an MMT packet of the HEVC-coded video signal, and an IP packet including the MMT packet is generated. This IP packet is transmitted to the IP service multiplexer 310.

Moreover, the similar processing is performed on the audio signal and the caption signal transmitted from the signal transmitting unit 302. That is, the IP packet including the MMT packet of the AAC-coded audio signal generated by the audio encoder 304 is transmitted to the IP service multiplexer 310, and the IP packet including the MMT packet of the caption-coded signal generated by the caption encoder 305 is transmitted to the IP service multiplexer 310.

Moreover, in the signaling encoder 306, the signaling message (MMT-SI) that describes the control information indicating the configuration and the like of the broadcast program is generated on the basis of the information transmitted from the EDPS 308, and the IP packet including the MMT packet in which the signaling message is disposed in the payload portion thereof is generated. This IP packet is transmitted to the IP service multiplexer 310.

Moreover, the data broadcasting application transmitted from the signal transmitting unit 302 or the EDPS 308 is supplied to the file encoder 307. In the file encoder 307, the data broadcasting application is coded according to the HTML5 format and is packetized to obtain an MMT packet, and the IP packet including the MMT packet is generated. This IP packet is transmitted to the IP service multiplexer 310.

In the IP service multiplexers 310, the IP packets including the video, audio, caption, signaling message (MMT-SI), and the file data (HTML5 document) transmitted from the encoders 303 to 307 are multiplexed and TLV packets that form one channel are generated.

In the TLV signaling encoder 309, the TLV packet in which the control information (TLV-SI) related to multiplexing of the IP packet is disposed in the payload portion thereof is generated on the basis of the information transmitted from the EDPS 308.

In the TLV multiplexer 311, the TLV packets generated by the IP service multiplexers 310-1 to 310-N and the TLV signaling encoder 309 are multiplexed to generate a TLV stream. In the modulation and transmission unit 312, RF modulation is performed on the TLV stream generated by the TLV multiplexer 311 and the RF-modulated signal is transmitted to the broadcast transmission path.

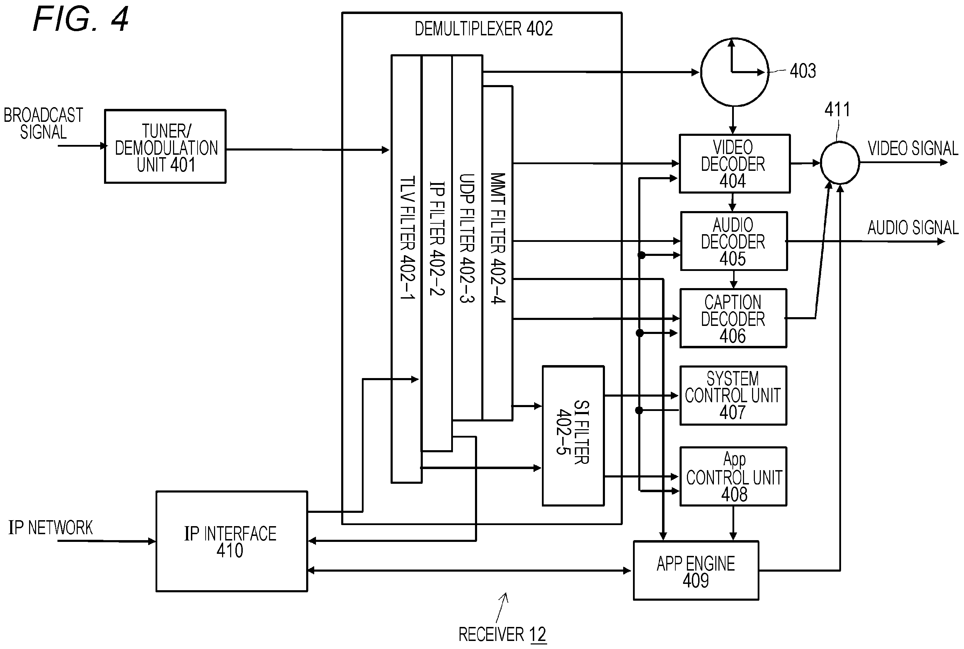

Fig. 4 illustrates a configuration example of the receiver 12 that receives the broadcast signal illustrated in Fig. 2. The receiver 12 illustrated includes a tuner/demodulation unit 401, a demultiplexer (DEMUX) 402, a clock recovery unit 403, a video decoder 404, an audio decoder 405, a caption decoder 406, a system control unit 407, an application (App) control unit 408, a cache memory 408, an application engine 409, an IP interface (I/F) 410, and a composition unit 411. The receiver 12 illustrated includes a retransmitter of an IPTV or a CATV as well as a television receiver or a set-top box installed in a household, for example.

The tuner/demodulation unit 401 selects and receives a broadcast signal and demodulates the broadcast signal to obtain a TLV stream. The demultiplexer 402 demultiplexes and depacketizes the TLV stream. In the present embodiment, the demultiplexer 402 includes a TLV filter 402-1, an IP filter 402-2, a UDP filter 402-3, an MMT filter 402-4, and an SI filter 402-5.

The TLV filter 402-1 filters the TLV packet transmitted via broadcasting on the basis of the TLV stream identification information. The IP filter 402-2 filters the IP packet from the TLV packet on the basis of an IP address and filters the IP packet received via the IP interface 410. Moreover, the UDP filter 402-3 filters a UDP packet. The MMT filter 402-4 filters the MMTP packet from the IP packet on the basis of information in an MMTP header (to be described later) so that the MMTP packets that carry the coded components of video, audio, caption, and application are distributed to the video decoder 404, the audio decoder 405, the caption decoder 406, and the application engine 409, respectively. The SI filter 402-5 filters the signaling information SI so as to be distributed to the system control unit 407 and the application control unit 408. The SI filter 402-5 includes anMMT-SI filter that filters MMT-SI from an MMT stream and a TLV-SI filter that filters TLV-SI from a TLV stream.

The clock recovery unit 403 generates time information synchronized with the current time information on the basis of information on the current time included in a NTP packet filtered by the IP filter 402-2 and the UDP filter 402-3 in the demultiplexer 402 and outputs the time information to the video decoder 404, the audio decoder 405, and the caption decoder 406 in order to decode respective timed media.

The video decoder 404 decodes the coded video signal obtained by the demultiplexer 402 to obtain a baseband video signal. Moreover, the audio decoder 405 decodes the coded audio signal obtained by the demultiplexer 402 to obtain a baseband audio signal. Moreover, the caption decoder 406 decodes the caption-coded signal obtained by the demultiplexer 402 to obtain a caption display signal.

The application control unit 408 controls the processing of the data broadcasting application on the basis of the signaling information received via the SI filter 402-5. For example, when the application control unit 408 analyzes the MMT-SI to find a data broadcasting application set to a default entry, the application control unit 408 instructs the application engine 409 to perform a data broadcasting presentation process.

In the broadcasting system 10 according to the present embodiment, it is assumed that the data broadcasting application is transmitted from the two systems, a broadcast signal and an IP network. In the former system, the data broadcasting application is received by the tuner/demodulation unit 401. In the latter system, the data broadcasting application is received by the IP interface 410. In any case, the MMT packet packetized in the demultiplexer 402 is distributed to the application engine 409 by the MMT filter 402-4.

The application engine 409 is an HTML browser or the like, for example, and processes the file data (HTML5 document or the like) which is the entity of the data broadcasting application to generate a data broadcasting display signal. Moreover, the application engine 409 may acquire file data necessary for displaying data broadcasting (mono media used for displaying data broadcasting, a linked application, and the like) from the IP network via the IP interface 410.

The system control unit 410 controls the operation of each unit of the receiver 12 on the basis of the signaling information received via the SI filter 402-5, operation information input from the user via a user operation unit (not illustrated), and the like. Moreover, the system control unit 410 controls decoding timings of the decoders 404 to 406 on the basis of the signaling information and adjusts the presentation timings of the video, audio, and caption. The composition unit 411 combines a caption display signal and a data broadcasting display signal with the baseband video signal to obtain a video signal for displaying video. Moreover, the baseband audio signal obtained by the audio decoder 405 is an audio signal for audio output. The main part of the broadcast program including the video and audio signals is output from a monitor display (not illustrated) as video and audio. Moreover, the data broadcasting processed by the data broadcasting application engine 409 is displayed on the monitor display so as to be superimposed on the screen of the main part of the broadcast program.

The IP interface 410 is configured as a network interface card, for example and connects to an IP network such as the Internet or a home network to transmit and receive IP packets.

Moreover, in the present embodiment, the IP packet filtered by the IP filter 402-2 on the basis of the IP address may be transmitted or retransmitted from the IP interface 410 to the IP network. Moreover, when it is determined that a broadcast service can be filtered by an IP address only, a specific service may be extracted by the IP filter 402-2 only in the demultiplexer 402 and the extracted service may be transmitted from the receiver 12 to the outside.

The operation of the receiver 12 illustrated in Fig. 4 will be described.

In the tuner/demodulation unit 401, the broadcast signal is received and demodulated to obtain a TLV stream. In the demultiplexer 402, the TLV stream is demultiplexed and depacketized, the coded signals of the NTP time information, video, audio, caption, and data broadcasting, and the signaling information are extracted and are distributed to the video decoder 404, the audio decoder 405, the caption decoder 406, the application engine 409, the system control unit 407, and the application control unit 408, respectively. Moreover, the IP packet received by the IP interface 410 is also demultiplexed and depacketized in a similar manner and is distributed to each unit.

Moreover, the NTP packet extracted by the demultiplexer 402 is distributed to the clock recovery unit 403. In the clock recovery unit 403, the time information synchronized with the time information carried on the NTP packet is generated on the basis of the time information. That is, in the clock recovery unit 403, time information synchronized with the time information generated by the clock unit 301 of the broadcast transmission system 11 is generated.

The coded video signal extracted by the demultiplexer 402 is transmitted to the video decoder 404 in which the video signal is decoded to obtain a baseband video signal. Moreover, the caption-coded signal extracted by the demultiplexer 402 is transmitted to the caption decoder 406 in which the caption signal is decoded to obtain a caption display signal.

In the application control unit 408, the processing of the data broadcasting application is controlled on the basis of the signaling information received via the SI filter 402-5. In the application engine 409 configured as a HTML browser or the like, the coded signal (HTML5 document) of the data broadcasting application extracted by the demultiplexer 402 is processed according to an instruction from the application control unit 408 to obtain a data broadcasting display signal.

In the composition unit 411, the caption display signal and the data broadcasting display signal are combined with the baseband video signal to obtain a video signal for screen display. Moreover, the coded audio signal extracted by the demultiplexer 402 is transmitted to the audio decoder 405 in which the audio signal is decoded to obtain a baseband audio signal for audio output. Then, the video and audio signals are output from a monitor display (not illustrated) as video and audio.

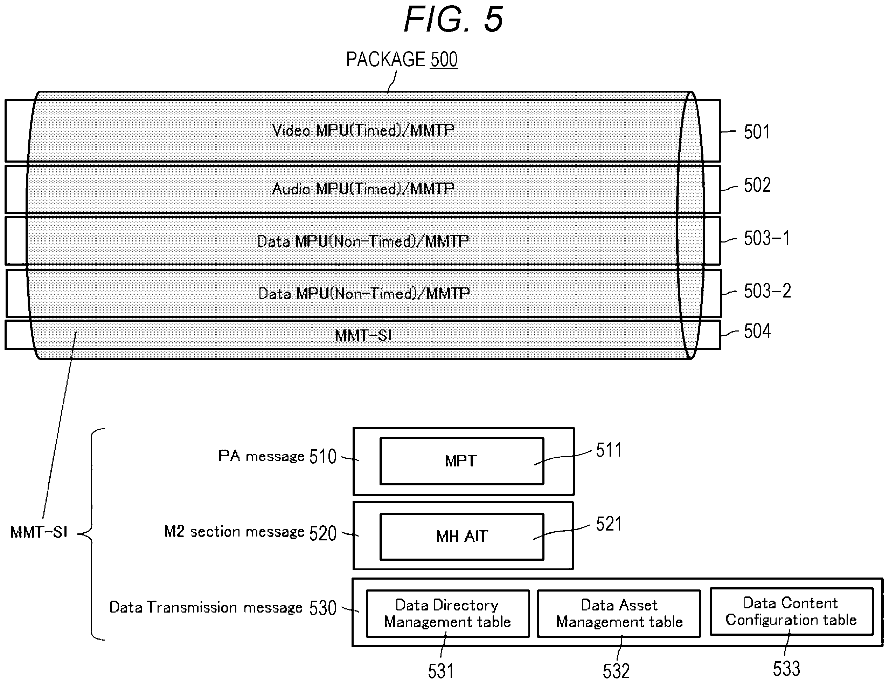

In the digital broadcasting system 10 illustrated in Fig. 1, it is assumed that the broadcast signal is transmitted from the broadcast transmission system 11 to the receiver 12 according to the MMT scheme. Fig. 5 illustrates the image of a broadcast signal 500 transmitted from the broadcast transmission system 11 to the broadcast transmission path according to the MMT scheme.

A broadcast signal of one service (channel: broadcast program) includes timed media associated with a main part of a broadcast program such as video, audio, and caption and non-timed media such as file data used in data broadcasting linked to the broadcast program. Media data obtained by coding these media is converted to an MMTP packet according to an MPU format and the MMTP packet is transmitted via an IP packet. Moreover, the signaling information (MMT-SI) (which indicates a configuration or the like of a broadcast program) which is associated with an MMT which is a media transport scheme is also transmitted via an IP packet. In a broadcast transmission path, these IP packets are transmitted according to the format of the TLV packet as a TLV stream. The signaling information (TLV-SI) related to a TLV multiplexing format for multiplexing IP packets is also transmitted according to the TLV packet format.

In the MMT scheme, it is easy to transmit data of timed media and non-timed media that form one channel (broadcast program) using a combination of different transmission paths. In the example illustrated in Fig. 5, assets 501 to 504 for each data type such as video, audio, caption, file data, and signaling information are used as the broadcast signal 500. Each asset corresponds to one IP data flow. The IP data flow mentioned herein is a set of IP packets of which the five fields including a source IP address of an IP header and a UDP header, a destination IP address, a protocol type of the IP header, a source port number, a destination port number have the same values. Note that in the drawing, the transmission path for caption data is not illustrated for the sake of convenience. Moreover, the TLV-SI stream is not illustrated in Fig. 5.

Although the MMT-scheme broadcasting system 11 transmits IP packets via the broadcast transmission path, the broadcasting system can perform an operation so that one IP address is mapped to each broadcast service (or for each broadcasting station). In such a case, the receiver can access the assets 501 to 504 of a desired broadcast service (or a desired broadcasting station) by filtering the broadcast signal 500 on the basis of the IP address. MMT protocol (MMTP) packets transmitted by the assets 501 to 504 in the same IP address can be uniquely designated by packet identification information (packet_id: PID). Moreover, MMTP packets on different IP addresses can be designated by a combination of packet identification information, an IP address, and a port number.

One channel (broadcast program) can be said to be a "package" which includes a plurality of different types of assets such as video, audio, caption, and file data (data broadcasting application). The "package" mentioned herein is a logical set of media data transmitted using assets. Moreover, the "asset" mentioned herein is the entity of data which is correlated with unique asset identification information (asset_id) and used for forming a multimedia presentation. Note that an asset is in correspondence to a component (that is, a video asset corresponds to a video component, an audio asset corresponds to an audio component, and a file data asset corresponds to a file data component).

Each asset is made up of a set (logical group) of one or more MPUs that share the same asset identification information. An MPU can be said to be a format that serves as a transmission unit in the MMT scheme. Each MPU is transmitted on Elementary Streams (ESs) (that is, the assets 501 to 503) dedicated for respective assets. That is, an MMTP packet of a coded video signal including an MPU logical group of video signals having the same asset identification information is transmitted on the transmission path 501. Similarly, an MMT packet of a coded audio signal including an MPU logical group of audio signals having the same asset identification information is transmitted on the transmission path 502, and an MMT packet of a coded application including an MPU logical group of data broadcasting applications having the same asset identification information is transmitted on the transmission path 503. Each MPU is specified by asset identification information and a sequence number of the MPU on the corresponding transmission path. Moreover, an asset that transmits each media can be identified by asset identification information.

More specifically, a plurality of same types of assets (that is, having different asset identification information) may be transmitted via one package (broadcast program). For example, two or more data broadcasting applications may be provided for the same broadcast program. For example, a program-linked data broadcasting application that is linked to a broadcast program and a program-nonlinked data broadcasting application (for example, a weather forecast, news, and the like) that is not linked to a broadcast program are assigned to separate asset identification information as individual assets and are transmitted via different assets as separate MPU logical groups. Fig. 5 illustrates a transmission path 503-1 for a broadcast program-linked data broadcasting application and a transmission path 503-2 for a broadcast program-nonlinked data broadcasting application.

Moreover, the MMT scheme can be used commonly for a plurality of transmission paths for broadcasting and communication. For example, non-timed media such as a data broadcasting application (HTML5 document or the like) can be provided via a communication transmission path (not illustrated) such as an IP network as well as being transmitted together with timed media using the broadcast signal transmission path 503 as illustrated in Fig. 5.

On the transmission path 504, an MMTP packet including MMT-SI which is a transmission control signal indicating information related to a configuration of an MMT package and a broadcast service is repeatedly transmitted by a carousel scheme. Examples of the MMT-SI signaling message transmitted via the transmission path 504 include a PA message 510, an M2 section message 520, and a data transmission message 530.

For example, the PA message 510 is control information indicating the configuration or the like of the broadcast program and includes an MMT Package (MP) table 511 that describes information that forms a package such as an asset list and the location thereof.

The PA message 510 is an entry point of the broadcast service, and fixed packet identification information (for example, 0x0000) is allocated to an MMTP packet that transmits the PA message 510. Therefore, the receiver can designate the fixed packet identification information on the asset 504 to acquire the PA message 510. Moreover, it is possible to designate the respective assets (video, audio, caption, file data (data broadcasting application), and the like) that form the package (broadcast program) by referring to the MP table 511 transmitted via the PA message 510.

Moreover, the M2 section message 520 is a message that transmits a section extension format of MPEG-2 Systems. A signaling table such as an MH Application Information Table (MH-AIT) 521 or the like is stored in the M2 section message 520. The MH-AIT 521 is a table that transmits dynamic control information on applications and additional information necessary for execution. Specifically, the MH-AIT 521 designates a processing method (an activation state to be applied to application) of a data broadcasting application (file data) transmitted via a broadcast transmission path as a data asset and a location (URL).

Moreover, the data transmission message 530 is a message for transmitting control information related to transmission of a data broadcasting application via broadcasting. Signaling tables including a data directory management table 531, a data asset management table 532, and a data content management table 533 are stored in one data transmission message 530.

The data directory management table 531 is a table for managing a data broadcasting application in directory units (in other words, in production units of the data broadcasting application). Since this table describes a directory structure related to directories included in one package and sub-directories and files (items used for transmission of files) included in a directory, a file configuration of the application and a configuration for file transmission can be separated.

Moreover, the data asset management table 532 is a table for managing the data broadcasting application in asset units and describes a configuration of MPUs in an asset and version information of each MPU.

Moreover, the data content management table 533 is a table for managing the data broadcasting application for each Presentation Unit (PU). This table describes the configuration information of files of the data broadcasting application in presentation units (PU) of data broadcasting and can be used for flexible and effective cache control of file data for the data broadcasting application.

In the MMT-based data broadcasting application transmission scheme, by utilizing the three signaling tables 531 to 533 transmitted via the data transmission message, a data structure in utilization units such as application units and presentation units can be expressed independently from a transmission data structure in file units and a directory structure in production of contents (data broadcasting application). Therefore, the receiver can control caches in utilization units such as application units and presentation units to effectively utilize cache memories (for example, see the specification of Japanese Patent Application No. 2014-88630 assigned to the present applicant).

Note that the description of a detailed data structure of the signaling tables of the data directory management table 531, the data asset management table 532, and the data content management table 533 will be omitted.

Elements that form coded signals in the MMT scheme include a Media Fragment Unit (MFU), an MPU, an MMTP payload, and an MMTP packet. The MMTP packet is formed by appending the MMTP header to the MMTP payload. As described above, the timed media such as video, audio, caption, and the like and the non-timed media such as data broadcasting file data are transmitted as an MMTP packet.

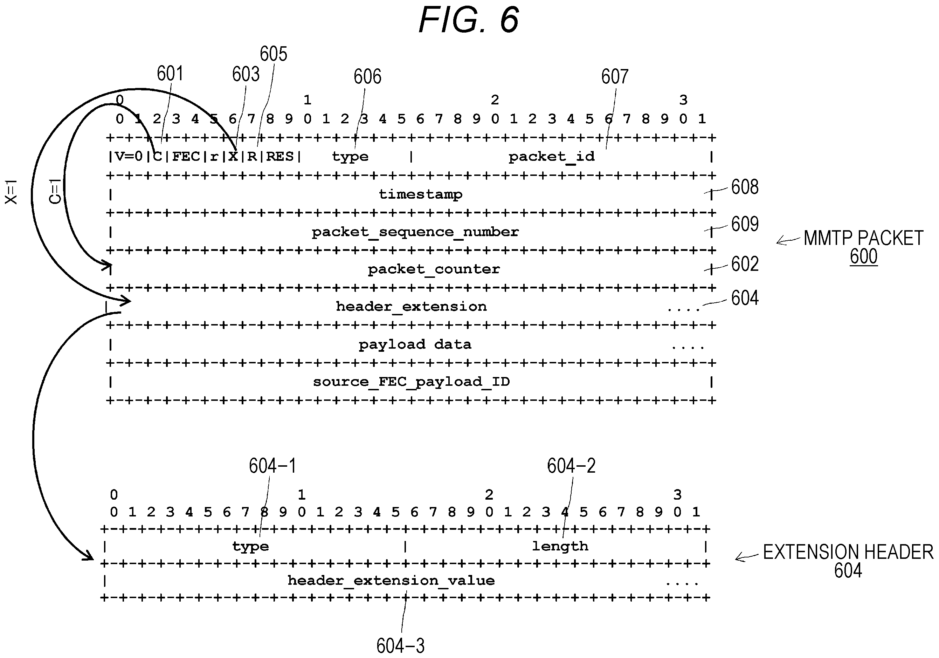

Fig. 6 illustrates a syntax example of an MMTP packet 600. The MMTP packet is a unit of media data that is formatted to be transmitted using an MMT protocol.

When 1 is assigned to a packet counter flag "C" indicated by reference numeral 601, this indicates that a field of a packet counter indicated by reference numeral 602 is present in the MMTP packet 600. The packet counter 602 is a 32-bit field in which an integer value indicating the order of the MMTP packet in the same asset (IP data flow) is written regardless of the packet identification information, and the packet counter 602 is incremented by 1 whenever the MMTP packet is transmitted via an asset. The packet counter 602 starts from an arbitrary value.

When 1 is assigned to an extension header flag "X" indicated by reference numeral 603, this indicates that an extension header 604 indicated by reference numeral 604 is present in the MMTP packet 600. A syntax example of the extension header 604 is also illustrated in the lower part of Fig. 6. The extension header 604 includes a 16-bit type field indicated by reference numeral 604-1, a length field indicated by reference numeral 604-2, and a header_extensin_value field indicated by reference numeral 604-3. A byte length of the header_extensin_value field is written to the length field. Extension information which does not follow the MMT specification may be written to the header_extensin_value field.

When 1 is assigned to a Random Access Point (RAP) flag indicated by reference numeral 605, this indicates that the payload of the MMTP packet 600 includes a Random Access Point to a data stream of the data type.

A type value indicating a data type of the payload of the MMTP packet 600 is written to a type field indicated by reference numeral 606. The definition of the type value is illustrated in Table 1. When a type value "0x00" is written to the type field, it is understood that the payload of the MMTP packet is an MPU (including a fragment of the MPU which is aware of media).

**[Table 1]**

| Value | Data type | Definition of data unit |
|---|---|---|
| 0x00 | MPU | a media-aware fragment of the MPU |
| 0x01 | Generic object | A generic object such as a complete MPU or an object of another type |
| 0x02 | Signaling message | one or more signaling messages or a fragment of a signaling message |
| 0x03 | Repair symbol | a single complete repair symbol |

An integer value which is packet identification information for identifying a data type of the payload (in other words, for distinguishing assets) is written to a 16-bit packet_id field indicated by reference numeral 607. The value of this field originates fromasset identification information (asset_id) for identifying an asset that belongs to the MMTP packet 600. Mapping between the packet identification information (packet_id) and the asset identification information (asset_id) is represented by an MMT package (MP) table which is a part of the signaling message (to be described later).

The time at which the starting byte of the MMTP packet 600 is output from a transmission entity is described in a 32-bit timestamp field indicated by reference numeral 608 as a short-format NTP time stamp defined by RFC 5905.

A sequence number of the MMTP packet having the same packet identification information (packet_id) is described in a 32-bit packet_sequence_number field indicated by reference numeral 609 as an integer value. The packet sequence number starts from an arbitrary value.

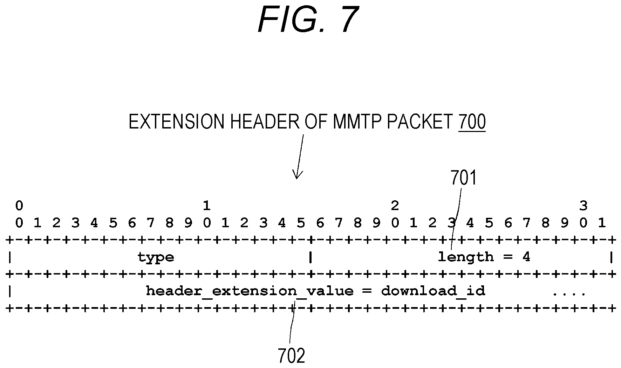

Fig. 7 illustrates a syntax example of an extension header 700 of an MMTP packet that transmits non-timed media. As illustrated in the drawing, in this case, 4 is written in a length field 701 as a byte length of a header_extensin_value field. 4-byte download identification information (download_id) is described in the header_extensin_value field.

When an MPU is transmitted using the MMT protocol, the MPU needs to be packetized and depacketized on the transmission and reception sides, respectively. By the packetization, the MPU is inserted into the MMTP payload and is transmitted via an MMTP packet. The format of the MMTP payload allows fragmentation of the MMTP payload so that a large payload can be transmitted. Moreover, the format of the MTP payload allows aggregation in which a plurality of MMTP payloads is inserted into a single MMTP payload so as to correspond to a small data unit. On the reception side, depacketization is performed to restore the original MPU data.

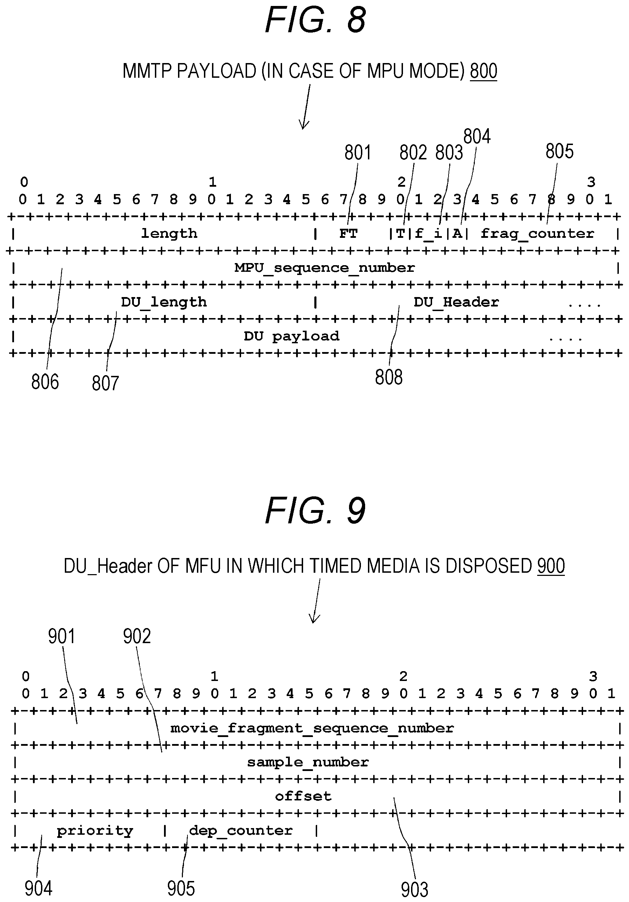

Fig. 8 illustrates a syntax example of an MMTP payload 800 in the case of an MPU mode. The MPU mode is a case in which "0x00" is written to the type field 606 of the MMTP header (see Fig. 6). The MMTP packet of the MPU mode is used for transmission of video, audio, and file data (data broadcasting application).

The type of a fragment of information stored in the MMTP payload is indicated in a fragment type (MPU Fragment type: FT) field indicated by reference number 801 as a 4-bit value. The MMTP payload is coded according to the FT value. The definition of the FT value is illustrated in Table 2.

**[Table 2]**

| FT | Description | Content |
|---|---|---|
| 0 | MPU metadata | contains the ftyp, mmpu, moov, and meta boxes as well as any other boxes that appear in between. |
| 1 | Movie fragment metadata | contains the moof box and the mdat box, excluding all media data inside the mdat box. |
| 2 | MFU | contains a sample or sub-sample of timed media data or an item of non-timed media data. |

Timed (T) indicated by reference numeral 802 is a time data flag and indicates whether data stored in the MMTP payload is data that designates a presentation time. When 1 is written to the time data flag, this indicates that the fragment of the MPU that transmits timedmedia is stored in the MMTPpayload. When 0 is written to the time data flag, this indicates that the fragment of the MPU that transmits non-timedmedia is stored in the MMTP payload.

A Fragmentation Identifier (f_i) field indicated by reference numeral 803 indicates information on fragmentation of a data unit stored in the MMTP payload using two bits. The definition of the four values of f_i is illustrated in Table 3.

**[Table 3]**

| Value | Definition of data unit |
|---|---|
| 00 | Payload includes an integer number of data units. |
| 01 | Payload includes data units of a starting fragment. |
| 10 | Payload includes data units of a middle fragment. |
| 11 | Payload includes data units of last fragment. |

An aggregation (A) flag indicated by reference numeral 804 indicates whether the MMTP payload stores two or more data units. 1 is written to the aggregation (A) flag when the MMTP payload is obtained by aggregating a plurality of data units.

The number of pieces of fragmented data present later than a portion that the MMTP payload stores when data is fragmented is described in an 8-bit fragment_counter (fragmentation counter) indicated by reference numeral 805.

When MPU metadata, movie fragment metadata, and an MFU are stored in the MMTP payload, a sequence number of the MPU to which the data belongs is described in an MPU sequence number (MPU_sequence_number) field indicated by reference numeral 806.

In a 16-bit DU_length field indicated by reference numeral 807, the length of a data unit (DU: Data Unit) subsequent thereto is described. However, when the aggregation (A) flag 804 is 0, the DU_length field 807 is not present.

A DU_Header indicated by reference numeral 808 is a header of the data unit. However, the DU_Header 807 is not present when the FT value 801 is 0 or 1 (that is, the fragment type is not the MFU). The MFU includes a sample or a sub-sample of timed media or an item of non-timed media.

Fig. 9 illustrates a syntax example 900 of DU_Header stored in the MMTP payload 800 in which the timed media is disposed. A sequence number of a movie fragment to which the MFU belongs is described in a movie fragment sequence number (movie_fragment_squence_number) field indicated by reference numeral 901. A sample number of the MFU is described in a sample number (sample_number) field indicated by reference numeral 902. An offset of the MFU in a sample to which the MFU belongs is indicated in a byte unit in an MFU offset field indicated by reference numeral 903. A value indicating relative importance of the MFU in the MPU to which the MFU belongs is described in an MFU priority field indicated by reference numeral 904. The number of MFUs which cannot perform decoding unless the MFU is decoded is indicated in an MFU dependency (dep_counter) field indicated by reference numeral 905.

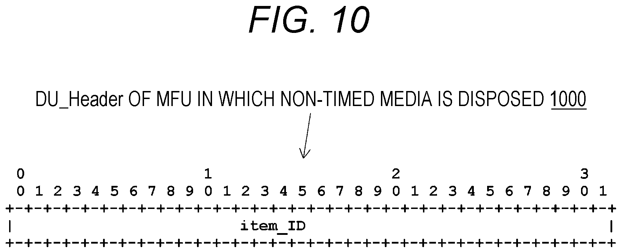

Fig. 10 illustrates a syntax example 1000 of DU_Header stored in the MMTP payload 800 in which non-timed media is disposed. In this case, 32-bit item identification information (item_id) for identifying items transmitted as a part of the MFU is stored in the DU_Header 1000. The item is used for transmission of file data that forms an application such as a HTML document and mono media (images, text, and the like) referred to from the HTML document. On an asset designated by the asset identification information, items can be uniquely specified by a combination of packet identification information (packet_id) in the header of the MMTP packet, the download identification information (download_id) in the extension header, and item identification information (item_id) in the DU header.

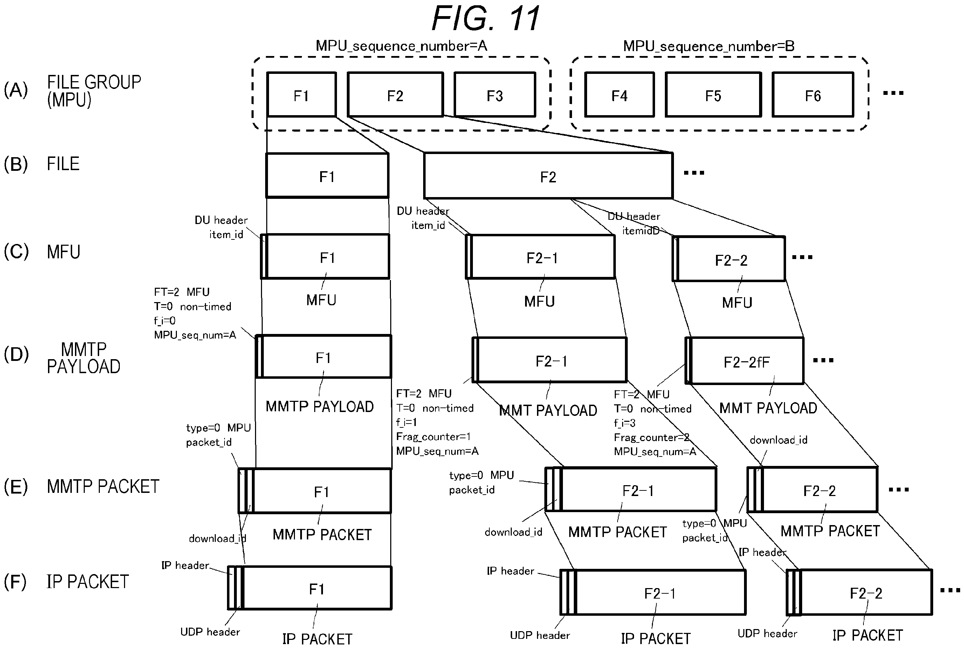

Figs. 11(A) to 11(F) illustrate a method of forming a packet transmitted on an asset (IP data flow). This drawing illustrates a packet configuration example when non-timed media data is transmitted.

Elements that form coded signals in the MMT scheme include an MFU, an MPU, an MMTP payload, and an MMTP packet. The MPU is the unit of transmission in the MMT scheme and the MFU is a smaller unit than the MPU. In transmission of video and audio signals, the MPU is also the unit of processing. The MPU includes one or more access units and video and audio can be decoded in a single MPU.

On the other hand, in transmission of non-timed media (that is, the data broadcasting application), one MFU corresponds to one file (HTML document, mono media, or the like) used in the data broadcasting application, and the MPU forms the unit of transmission in a group of a plurality of files.

In Fig. 11(A), a group of three files F1, F2, and F3 forms one MPU, and a group of three files F4, F5, and F6 forms another MPU. A MPU sequence number is allocated to each MPU made up of a group of files. A MPU sequence number "A" is allocated to the group of files F1, F2, and F3, and an MPU sequence number "B" is allocated to the group of files F4, F5, and F6.

Moreover, Figs. 11 (B) and 11 (C) illustrate a state in which files F1, F2, ..., and so on grouped into the MPU are disposed in MFUs. Since the file data F1 has a small file size, the file data F1 forms one DU payload as it is. On the other hand, since the file data F2 has a large file size, the file data F2 is fragmented into two parts F2-1 and F2-2 which form separate DU payloads, respectively. Moreover, a DU header that stores the item identification information (item_id) as illustrated in Fig. 10 is appended to the DU payloads to form MFUs.

Fig. 11(D) illustrates a state in which each MFU is converted to an MMTP payload. As illustrated in Fig. 8, an MMTP payload header including a fragment type (MPU Fragment Type: FT) field, a time data (T) flag, a Fragmentation Identifier (f_i) field, a fragment_counter field (in the case of fragmented MFUs), an MPU sequence number, and the like is appended to the DU payload in which MFUs are disposed whereby MFUs are converted to MMTP payloads.

A value "2" indicating "MPU" is described in the MFUs F1, F2-1, and F2-2 as the FT value, and a value "0" indicating non-timed media is set to the time data (T) flag. Since F1 is not fragmented, "0" is described in the f_i field. Moreover, since F2-1 and D2-2 are fragmented MFUs, f_i is set to "1" and the fragment_counter is appended to the MFUs. Moreover, since F1, F2-1, and F2-2 belong to the same MPU, the MPU sequence number "A" is appended thereto, and item identification information (item_id) for uniquely identifying items used for transmission of files is described.

Fig. 11 (E) illustrates a state in which an MMTP header and an extension header are appended to each MMTP payload to form an MMTP packet. As illustrated in Fig. 6, the MMTP header includes a type field and packet identification information (packet_id). Moreover, as illustrated in Fig. 7, in the case of MMTP packets that transmit non-timed media, download identifier information (dowmload_id) is stored in the extension header. Note that the MMTP payload is transmitted via one MMTP packet. One MMTP packet does not carry a plurality of MMTP payloads and one MMTP payload is not transmitted via a plurality of MMTP packets.

Fig. 11(F) illustrates a state in which MMTP packets are converted to IP packets. As illustrated in the drawing, a UDP header and an IP header are appended to the MMTP packet to form an IP packet. The MMTP packet is transmitted via one IP packet. One IP packet does not carry a plurality of MMTP payloads and one MMTP payload is not transmitted via a plurality of IP packets.

In data transmission of data broadcasting application based on the MMT scheme, as understood from Figs. 11(A) to 11(F), files are positioned in transmission units called MFU and the MPU is a unit that groups files on a higher layer of the MFU.

In timed media such as video and audio signals, the MPU is the unit of processing, and video and audio can be decoded in a single MPU. Moreover, the MFU is a smaller unit than the MPU, and the MFU can be extracted from sample data in the MPU. In contrast, in transmission of non-timed media (that is, the data broadcasting application), the MFU is clearly positioned in the unit of transmitting files, and the positioning of the MPU which is the higher layer thereof is not clear at the filing time of the present application.

Therefore, the present specification discloses a technology for positioning the MPU as the transmission unit of the data broadcasting application in the presentation unit (PU) of the data broadcasting application and a technology for positioning the MPU in the production unit (such as a directory) of the data broadcasting application. By positioning the MPU in the presentation unit of the data broadcasting application or the production unit of the data broadcasting application, it is possible to operate the broadcast service efficiently.

Here, the configuration of the signaling messages and the signaling tables (see Fig. 5) which are associated with operation of the broadcasting system which employs the technology disclosed in the present specification and are transmitted as MMT-SI will be described.

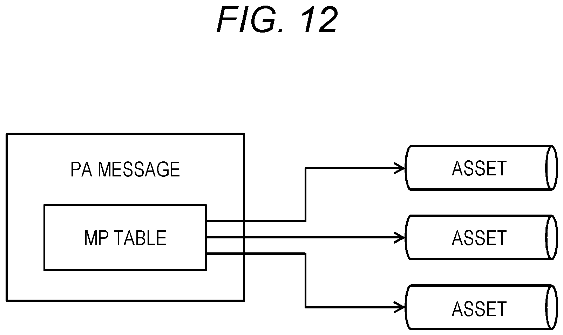

The packet identification information of messages and tables transmitted as MMT-SI may be fixed or may be indirectly designated from another table. Among these messages, the PA message is an entry point of a broadcast service, and fixed packet identification information (for example, 0x0000) is allocated thereto. In an MP table transmitted via the PA message, assets (video, audio, caption, file data (data broadcasting application), and the like) that form a package (broadcast program) are designated. Therefore, as illustrated in Fig. 12, it is possible to designate assets (video, audio, caption, file data (data broadcasting application), and the like) that form the package (broadcast program) by referring to the MP table.

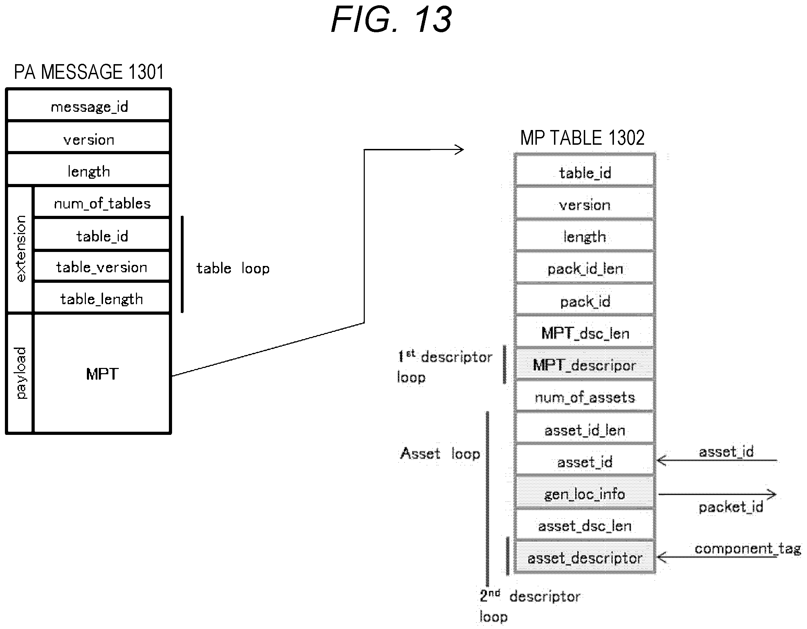

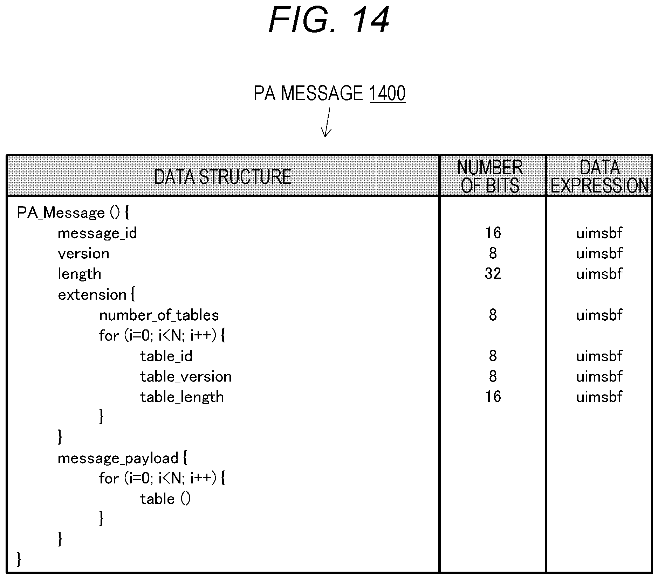

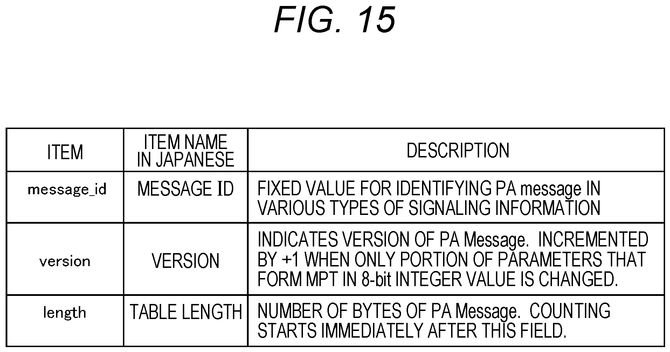

Fig. 13 illustrates a syntax example of a PA message 1301 and an MP table 1302 included in the PA message 1301. Moreover, Fig. 14 illustrates a syntax example 1400 of the PA message, and Fig. 15 illustrates the description of parameters included in the PA message.

Message_id is a 16-bit fixed value for identifying a PAmessage in various types of signaling information. Version is an 8-bit integer parameter that indicates the version of the PA message. For example, when only a portion of the parameters that form the PA message is updated, the version is incremented by +1. Length is a 32-bit parameter which indicates the size of the PA message in byte units, the size being counted immediately after this field.

Attribute information of a table disposed in the payload (message_payload) field is disposed in an extension field. Specifically, a number_of_tables field indicates the number of tables, and 8-bit table identification information (table_id), an 8-bit table version (table_version), and a 16-bit table length (table_length) are disposed in the subsequent table information loop as the attribute information of each table stored. Table_id is a fixed value for identifying a table. Table_version indicates the version of a table. Table_length indicates the size of a table in byte units.

An MP table is disposed in the message_payload field of the PA message. The MP table stores information related to a package including a list of all assets. Note that although a layoput configuration (LC) table and a package list (PL) table are also stored in the PA message in addition to the MP table, since these tables are not directly related to the technology disclosed in the present specification, the detailed description thereof will be omitted.

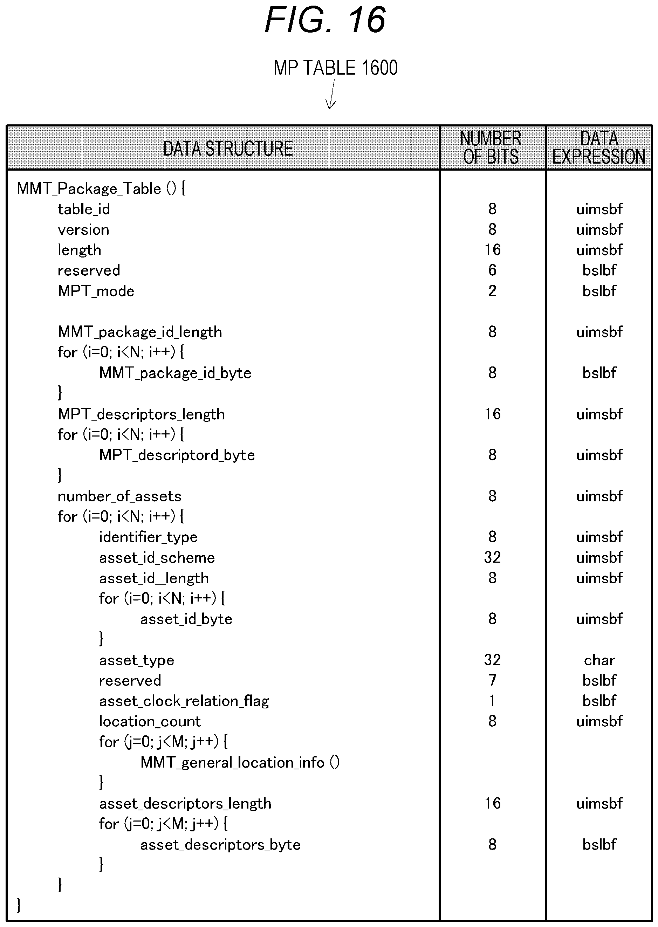

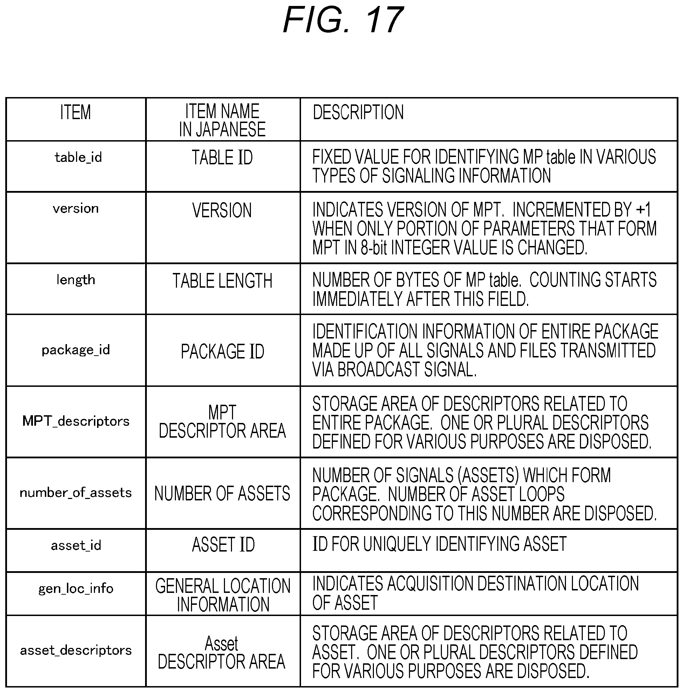

Fig. 16 illustrates a syntax example 1600 of an MP table stored in the message_payload field of the PA message. Moreover, Fig. 17 illustrates the description of the parameters included in the MP table. Hereinafter, the configuration of the MP table will be described.

Table_id is an 8-bit fixed value (0x20) for identifying that the table is an MP table. Version is an 8-bit integer value indicating the version of the MP table. For example, when only a portion of the parameters that form the MP table is updated, the version is incremented by +1. Length is a 32-bit parameter which indicates the size of the MP table in byte units, the size being counted immediately after this field. Moreover, MPT_mode illustrates the operation when the MP table is divided into subsets, and the detailed description thereof will be omitted.

MMT_package_id_length indicates the size of text information of the package identification information (MMT_package_id) in byte units. In the subsequent loop of the package identification information, the package identification information is indicated by MMT_package_id in byte units (MMT_package_id_byte). The package identification information is identification information of a package which is made up of assets including all signals (video, audio, and caption) transmitted via the broadcast signal (IP data flow) and file data as components. This identification information is text information of which the upper 16 bits have the same value as service identification information for identifying a service.

MPT_descriptor_length indicates the size of a MP table descriptor area in byte units. In the loop of the subsequent MP table descriptor, the content of the MP table descriptor is described in byte units (MPT_descroptors_byte). The MP table descriptor field is a storage area of descriptors related to the entire package.

Number_of_assets is an 8-bit parameter indicating the number of assets (signals and files) as the elements that form the package. A number of loops of asset information corresponding to the number_of_assets are disposed. Parameters including asset identification information (asset_id) for identifying individual assets, general location information (MMT_general_location_info), and an asset descriptor (asset_descriptor) are disposed in one asset information loop. The information disposed in the asset information loop will be described below.

Identifier_type indicates an ID system of an MMTP packet flow. When the ID system indicates asset identification information (asset_id), 0x00 is set. Asset_id_scheme indicates the format of the asset identification information. Asset_id_length indicates the size of the text information of the asset identification information in byte units. In the subsequent asset identification information loop, asset identification information is indicated in byte units (asset_id_byte).

Asset_type indicates the type of assets using a 32-bit character string. Asset_clock_relation_flag is a flag indicating the presence of a clock information field of the asset. When the flag is 1, a clock information identification field (asset_clock_relation_id) and a timescale flag field (asset_timescale_flag) are present. These fields are not present when the flag is 0. Location_count indicates the number of pieces of location information of the asset, and MMT_general_location_info which is location information of the asset is indicated in the subsequent location information loop repeated by the number of location_count. The asset location information is described in the format of the packet identification information (packet_id: PID) on an asset, which serves as an asset acquisition destination. Therefore, it is possible to extract the corresponding packet identification information from on the asset (IP data flow) by pulling the asset identification information from the MP table (see Fig. 13). The data structure of MMT_general_location_info will be described later.

Asset_descriptor_length indicates the text information of asset descriptor (asset_descriptor) in byte units. In the subsequent asset descriptor loop, the content of descriptors of respective assets is indicated in byte units (asset_descriptors_byte).

As described above, assets and components are in correspondence with each other (that is, a video asset corresponds to a video component, an audio asset corresponds to an audio component, and a file data asset corresponds to a file data component). In the present embodiment, it is assumed that a MH stream identification descriptor is disposed as one of asset descriptors. The MH stream identification descriptor is a descriptor that describes a component tag which is a label for identifying the stream of components (corresponding to the asset). Therefore, by designating the component tag in the MP table, it is possible to find the location information of the asset such as the packet identification information (packet_id: PID).

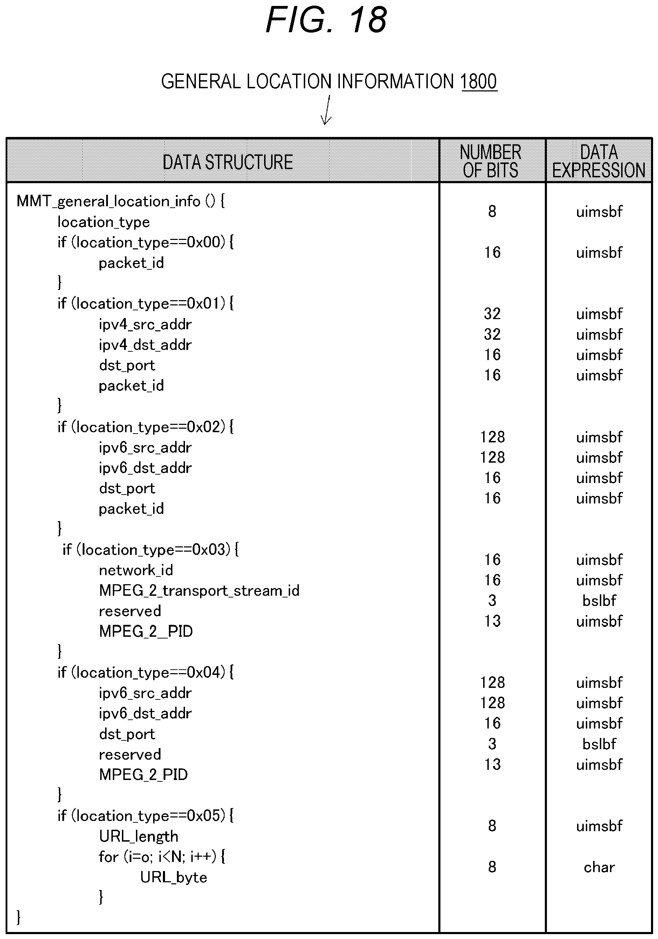

Fig. 18 illustrates a data structure example 1800 of MMT_general_location_info (general location information).

Location_type indicates the type of location information using 8 bits, which follows the following allocation in Table 4.

**[Table 4]**

| Value | Meaning of location type |
|---|---|
| 0x00 | indicates MMTP packet of the same IP data flow as IP data flow in which a table including this general location info is transmitted. |
| 0x01 | indicates MMTP packet of IPv4 data flow. |
| 0x02 | indicates MMTP packet of IPv6 data flow. |
| 0x03 | indicates MPEG-2 TS packet of MPEG-2 TS broadcasting network. |
| 0x04 | indicates MPEG-2 TS packet of IPv6 data flow. |
| 0x05 | indicates URL. |

When location_type is 0x00, this indicates packet identification information (packet_id) of an MMTP packet of the same IP data flow as the IP data flow in which a table including the location information is transmitted.

When location_type is 0x01, this indicates anMMTPpacket of an IPv4 data flowas the location information. Specifically, this location information indicates a source address (ipv4_src_addr) of the IPv4 data flow, a destination address (ipv4_dst_addr) of the IPv4 data flow, a destination port number (dst_port) of the IP data flow, and packet identification information (packet_id).

When location_type is 0x02, this indicates anMMTPpacket of an IPv6 data flow as location information. Specifically, this location information indicates a source address (ipv6_src_addr) of the IPv6 data flow, a destination address (ipv6_dst_addr) of the IPv6 data flow, a destination port number (dst_port) of the IP data flow, and packet identification information (packet_id).

When location_type is 0x03, this indicates an MPEG-2 TS packet of an MPEG-2 TS broadcasting network as location information. Specifically, this location information indicates network identification information (network_id) for identifying the broadcasting network, transport stream identification information (MPEG_2_transport_stream_id) for identifying the MPEG-2 TS, and packet identification information (MPEG_2_PID) of the MPEG-2 TS.

When location_type is 0x04, this indicates an MPEG-2 TS packet of an IPv6 data flow as location information. Specifically, this location information indicates a source address (ipv6_src_addr) of the IPv6 data flow, a destination address (ipv6_dst_addr) of the IPv6 data flow, a destination port number (dst_port) of the IP data flow, and packet identification information (MPEG_2_PID) of the MPEG-2 TS packet.

When location_type is 0x05, the location information is indicated by URL. Specifically, URL_length indicates the length of a URL byte field in byte units, and the URL character string is indicated in byte units (URL_byte) in the subsequent URL byte loop.

In the general location information illustrated in Fig. 18, the location information of an asset is described in the format of the packet identification information (PID) on an asset acquisition destination data flow. Therefore, it is possible to extract the corresponding packet identification information on the IP data flow by pulling the asset identification information from the MP table (see Fig. 13).

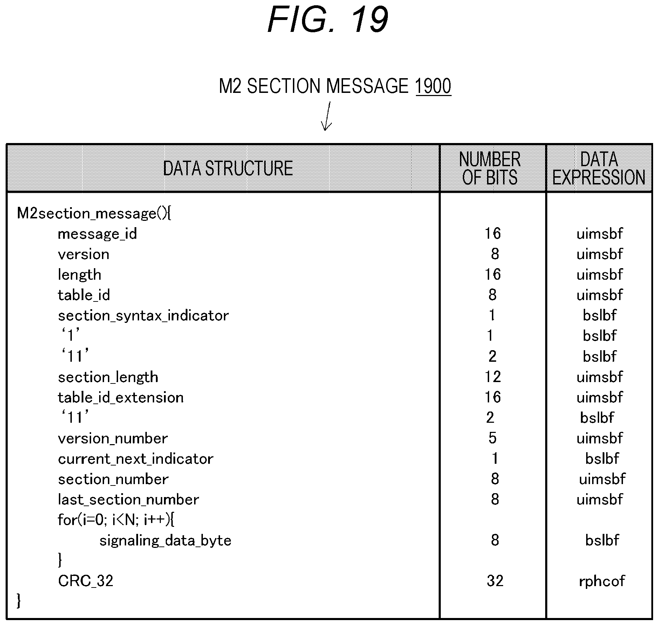

The M2 section message is a signaling message used for transmitting the section extension format of the MPEG-2 System as it is. Fig. 19 illustrates a syntax example 1900 of the M2 section message. Hereinafter, the meaning of the parameters of the M2 section message will be described.

Message_id (message identification) is a 16-bit fixed value for identifying an M2 section message in various types of signaling information. In the present embodiment, 0x8000 is set. Version (version) is an 8-bit integer parameter which indicates the version of the M2 section message. Length (message length) is a 16-bit parameter which indicates the size of the M2 section message in byte units, the size being counted immediately after this field. Table_id (table identification) is an area used for identifying a table to which this section belongs. Section_syntax_indicator (section syntax indicator) is set to "1" indicating an extension format. Section_length (section length) is an area in which a byte length of data subsequent to the section length area is written. Table_id_extention (table identification extension) is an area in which table identification is extended. Version number (version number) is an area in which a version number of the table is written. Current_next_indicator (current next indicator) is set to "1" when the table is currently available or is set to "0" when the table is not currently available and become effective next. Section_number (section number) is an area in which a section number that forms the table is written. Last_section_number (last section number) is an area in which the last section number that forms the table is written. Moreover, information that forms the table is described in byte units (signaling_data_byte) in the subsequent signaling data loop. Moreover, a cyclic redundancy code CRC32 (CRC) according to ITU-T Recommendation H.222.0 is appended to the end of this table.

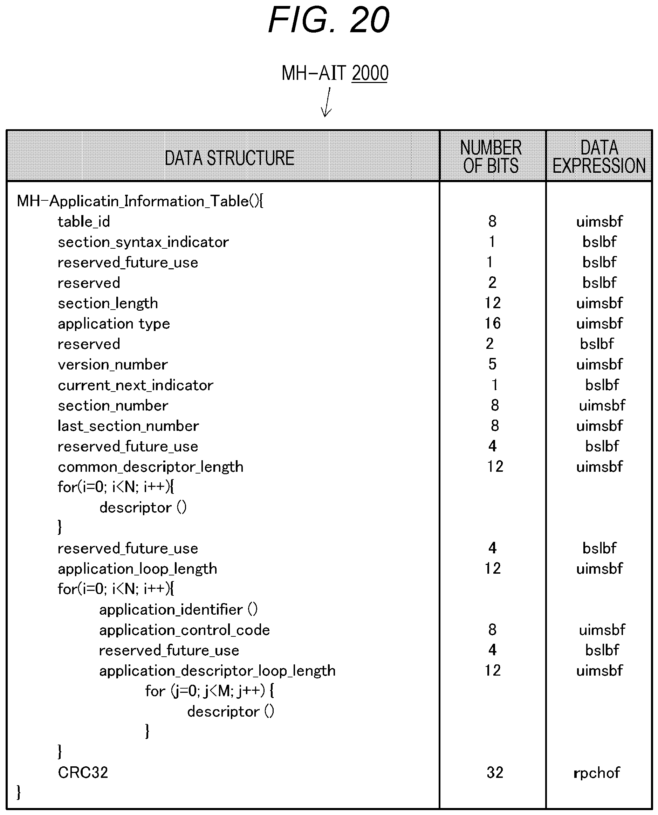

Fig. 20 illustrates a syntax example 2000 of an MH AI (Application Information) table (MH AIT), which is transmitted via the M2 section message. Hereinafter, the meaning of the parameters of the MH AI table will be described.

Table_id (table identification) is an 8-bit fixed value for identifying an application information (AI) table in various types of signaling information. In the present embodiment, 0x89 is set. Section_syntax_indicator (section syntax indicator) is a 1-bit field and is always "1". Section_length (section length) is a 12-bit field and defines a byte length of the sections from the section length field to the end of the section that includes CRC32. This value does not exceed 4093 (0xEFD in hexadecimal). Application_type (application format) is a 16-bit field and indicates the value of an application transmitted via the AIT. In DVB, 0x0001 is assigned to a DVB-J application. Moreover, 0x0001 is assigned to an ARIB-J application. Version_number (version number) is a 5-bit field and is a version number of a sub-table. Version_number is a version number of the MH AI table, and is incremented by +1 when information in the sub-table is changed. Moreover, when the value of the version number is "31", the value returns to "0". Current_next_indicator (current next indicator) is always "1". Section_number (section number) is an 8-bit field and indicates a section number. The section number of the first section within the sub-table is 0x00. The section number is incremented by +1 whenever a section having the same table identification and application format is added. Last_section_number (last section number) is an 8-bit field and defines the last section number in the sub-table to which the section belongs.

Common_descriptor_length (common descriptor loop length) is an 8-bit field and indicates the byte length of a subsequent descriptor (the descriptor in a description area), and this descriptor (the descriptor in a description area) is written to a series of areas made up of a number of loops corresponding to this byte count. The descriptor in this common descriptor area is applied to all applications in the AIT sub-table. For example, a transmission protocol descriptor that designates a transmission method or an acquisition location of an application is written in this descriptor field.

Application_loop_length is an area in which the number of pieces of application information included in the MH AI table is written. Moreover, a number of application information loops corresponding to the number indicated by the application_loop _length are disposed. Moreover, acyclic redundancy code CRC32 (CRC) according to ITU-T Recommendation H.222.0 is appended to the end of this table.

Application_identifier (application identifier), application_control_code (application control code), and application information are disposed in one application information loop.

Here, application_identifier (application identifier) is a parameter for identifying an application. Application_control_code (application control code) is an 8-bit field and defines a control code that controls an application state. The semantics of this field depend on the value of an application format. Table 5 illustrates the semantics of an application control code when the semantics do not depend on the application format. Moreover, application_descriptor_loop_length (application information descriptor loop length) indicates an application information descriptor byte length, and the descriptor (application information descriptor) is written to a series of areas made up of a number of loops corresponding to this byte count. The application information descriptor in the descriptor area is different from the common descriptor and is applied to an application designated by application_identifier only.

**[Table 5]**

| Value of application control code | Identification Name | Meaning |
|---|---|---|
| 0x01 | AUTOSTART | activates application. |
| 0x02 | PRESENT | indicates that application is in executable state. |
| 0x04 | KILL | stops application. |
| 0x05 | PREFETCH | acquires and retains application. |

In short, the MH AI table is a table that designates a processing method of an application (file data) transmitted via the broadcast transmission path according to the MMT transmission scheme, a transmission method (transport_protocol), and a location (URL). Upon receiving the MH AI table transmitted via the M2 section message, the receiver acquires an application according to the designated transport_protocol from the location designated by the transmission protocol descriptor in order to execute the process designated by application_control_code.

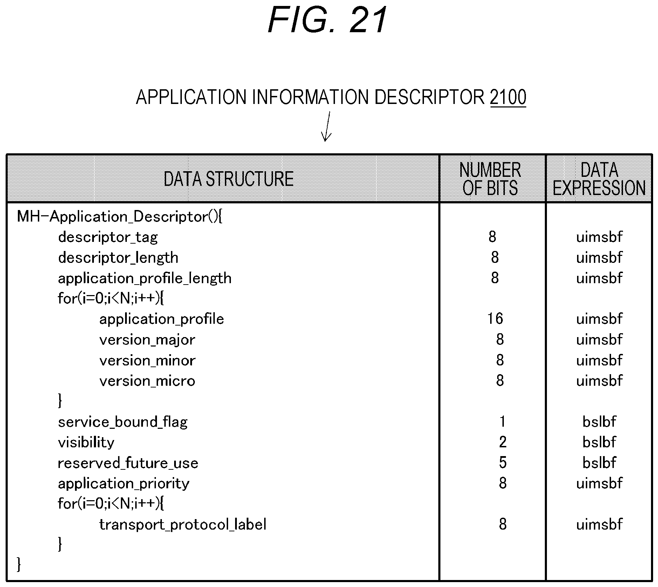

Fig. 21 illustrates a syntax example 2100 of an application information descriptor which is always disposed for each application in an application information loop of the MH AI table. Hereinafter, the meaning of the parameters of the application information descriptor 2100 will be described.

Descriptor_tag is an 8-bit integer value for identifying the descriptor 2000. Descriptor_length is an area in which a byte length of the data of the descriptor 2100 subsequent to this field is written.

Application_profile_length indicates a byte length of the entire application profile information, and the application profile information (application_profile) is written to a series of areas made up of a number of loops corresponding to this byte count. Application_profile is a profile of a receiver that can be executed by this application and indicates a request function using a bitmap for each of functions requested to the receiver. However, the upper 3 bits thereof indicate functional bitmap switching. The bitmap is defined for each version. Moreover, version_major, version_minor, and version_micro are versions defined by an application profile.

Service_bound_flag is a flag indicating whether this application is effective or not in the current service alone. Visibility indicates whether the application is visible or not. Application_priority is a relative priority between applications notified in this service. Transport_protocol_label indicates a value for uniquely identifying protocols used for transmitting applications. Transport_protocol_label corresponds to the field of the same name, of the transmission protocol descriptor.

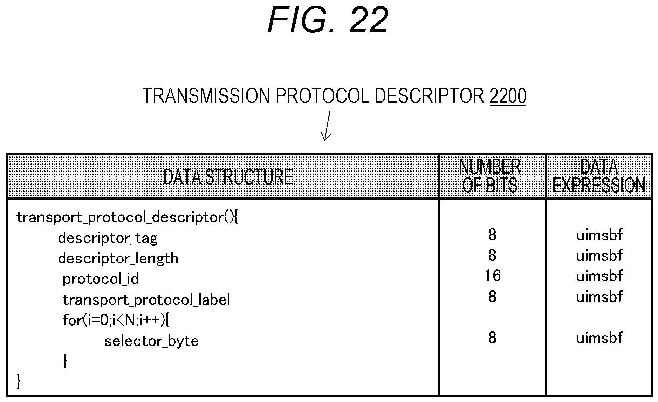

Fig. 22 illustrates a syntax example 2200 of the transmission protocol descriptor. The transmission protocol descriptor is disposed in the common descriptor loop of the MH-AIT or the application information descriptor loop in order to designate the transmission protocol of broadcasting and communication as an application transmission means and indicate the location information of an application which depends on the transmission protocol. Hereinafter, the meaning of the parameters of the transmission protocol descriptor will be described.

Descriptor_tag is an 8-bit integer value for identifying the descriptor 2200. Descriptor_length is an 8-bit area in which the byte length of the data of the descriptor subsequent to this field is written. Protocol_id (protocol identification information) indicates a protocol used for transmitting an application. As the value of protocol_id, 0x0003 indicates HTTP and HTTPS transmission and 0x0005 defines MMT and non-timed transmission. Transport_protocol_label (transmission protocol label) is a value for uniquely identifying transmission means when one application is transmitted via a plurality of paths and corresponds to a field of the same name, of the application information descriptor. Selector_byte (selector byte) is an application_identifier area in which a syntax is defined for each piece of protocol identification information.

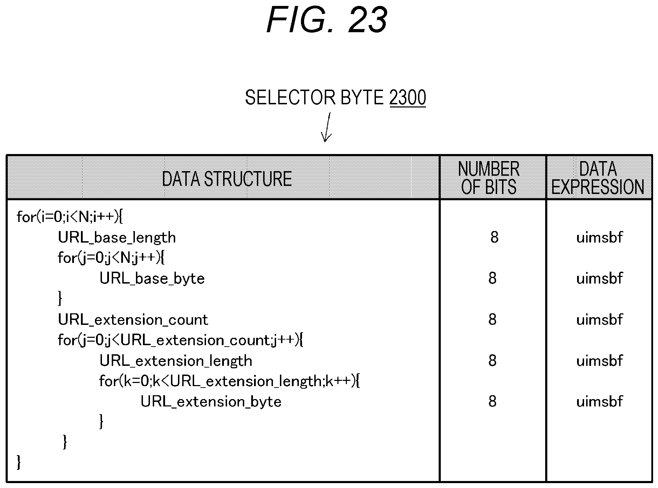

Fig. 23 illustrates a syntax example 2300 of a selector byte common to the HTTP/HTTPS and MMT non-timed transmission.

URL_base_length indicates a byte length of a base portion of the URL for acquiring an application, and a character string of the base portion of the URL for acquiring the application is written in a series of areas including a number of loops corresponding to this byte count in byte units (URL_base_byte) .

URL_extension_count indicates the number of extension portions (URL_extension subsequent to URL_base) of the URL for acquiring the application, and a number of URL_extension loops corresponding to the number indicated by URL_extension_count are disposed. Moreover, in one URL_extension loop, URL_extension_length indicates a byte length of an extension portion of the URL, and a character string of the extension portion of the URL is written in a series of areas made up of a number of loops corresponding to this byte count in byte units (URL_extention_byte). For example, when the base portion of the URL is "http://www.xbc.com" and the extension portion of the URL is "index.html," it is possible to obtain a complete URL "http://xbc.com/index.html" by connecting these character strings extracted from the selector byte.

In short, it is possible to acquire an application transmission means (MMT transmission or HTML transmission) and location information (URL) by referring to the application information descriptor and the transmission protocol descriptor in the application information loop of the MH AI table.

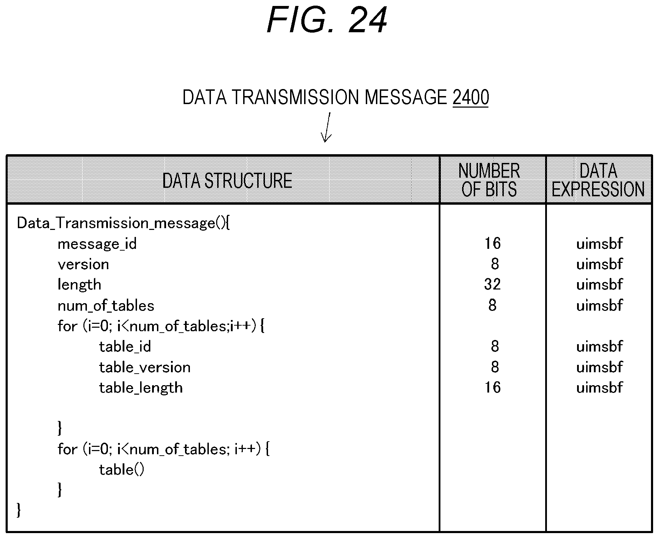

Fig. 24 illustrates a syntax example 2400 of the data transmission message. Hereinafter, the meaning of the parameters of the data transmission message will be described.

Message_id is a 16-bit fixed value for identifying a data transmission message in various types of signaling information. Version (version) is an area in which a version number of the data transmission message is written. Length (message length) is a 32-bit parameter that indicates the size of the date of the message subsequent to this field in byte units.

Num_of_tables (number of tables) indicates the number of tables stored in the data transmission message. A number of table information loops corresponding to the number indicated by num_of_tables are disposed as tables to be stored in the data transmission message.

In one table information loop, table_id (table identification), table_version (table version), and table_length (table length) are stored as table information. The table_id (table identification) is an area used for identifying a table to be stored in this data transmission message. In the data transmission message, three types of signaling tables including a data directory management table, a data asset management table, and a data content management table are transmitted (as described above, see Fig. 5), and the table_id identifies each of those tables. Table_version (table version) indicates the version of a table to be stored in this data transmission message. Table_length (table length) indicates the size of a table to be stored in this data transmission message in byte units. Table (table) indicates a table to be stored in this data transmission message.

Moreover, a number table loops corresponding to the number indicated by num_of_tables are disposed. Information on the content of a table identified by table_id is stored in one table loop.

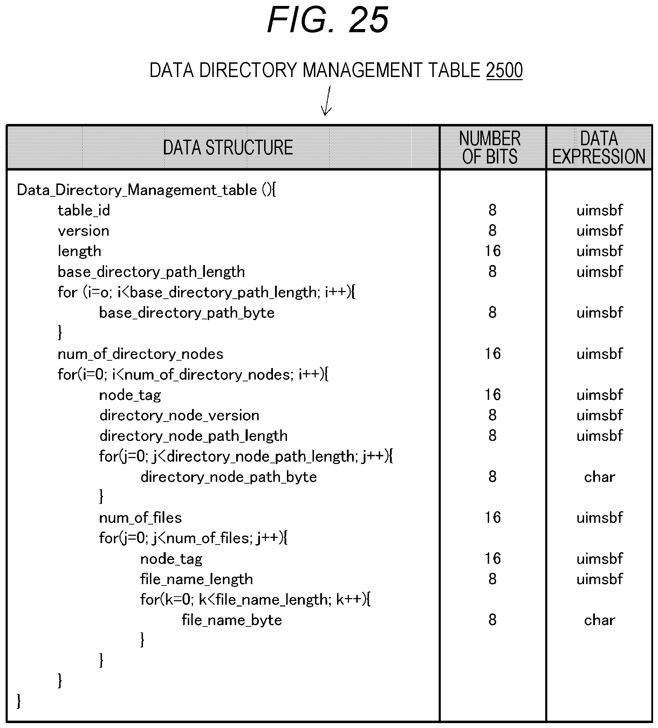

Fig. 25 illustrates a syntax example 2500 of a data directory management table (DDMT) transmitted via the data transmission message. The data directory management table is a table for managing the data broadcasting application in directory units (in other words, in production units of the data broadcasting application). This table describes a directory structure related to directories included in one package and sub-directories and files included in the directory. Hereinafter, the meaning of the parameters of the data directory management table will be described.

Table_id (table identification) is an 8-bit fixed value that indicates a data directory management table in various types of signaling information. Version (version) is an 8-bit integer parameter that indicates the version of this data directory management table. For example, when only a portion of the parameters that form the table is updated, the version is incremented by +1. Length is a 16-bit parameter that indicates the size of the data directory management table in byte units, the size being counted immediately after this field.

Base_directory_path_length indicates a byte length of a base directory node path area, and a base node directory path is written in a series of area made up of a number of loops corresponding to this byte count in byte units (base_directory_path_byte). The base directory path is expressed in an absolute URL format for accessing a corresponding directory, for example.

Num_of_directory_nodes indicates the number of nodes of the directory described in the data directory management table. Moreover, a number of directory node loops corresponding to the number indicated by num_of_directory_nodes are disposed, and information of each directory is stored.

Attribute information of each directory node stored in the data directory management table and information on each file data included in the directory are stored in one directory node loop.

Node_tag is a node tag of a directory node and indicates a label for identifying a directory. Derectory_node_version indicates the version of a directory node. Directory_node_path_length indicates a byte length of a directory node path area, and a directory node path is written to a series of areas made up of a number of loops corresponding to this byte count in byte units (directory_node_path_byte).

Num_of_files indicates the number of files included in the directory. Then, a number of file node loops corresponding to the number indicated by num_of_files are disposed. Node_tag and a file name are stored in each file node loop as information on each file data included in the directory. The node_tag in this loop is a node tag of a file and indicates a label for identifying the file. File_name_byte indicates a byte length of a file name area, and a file name is written in a series of areas made up of a number of loops corresponding to this byte count in byte units (file_name_length). Here, the directory node path is expressed in a relative URL format from the base directory path, for accessing the corresponding directory. Moreover, it is possible to obtain a complete URL for accessing the corresponding file by connecting the character strings of the base directory path, the directory path, and the file name sequentially. For example, when the base directory path (URL) is "http://www.xbc.com," the directory node path (URL) is "programA," and the file name is "index.html," it is possible to obtain the complete URL "http://www.xbc.com/programA/index.html" by connecting these character strings extracted from the data directory management table.

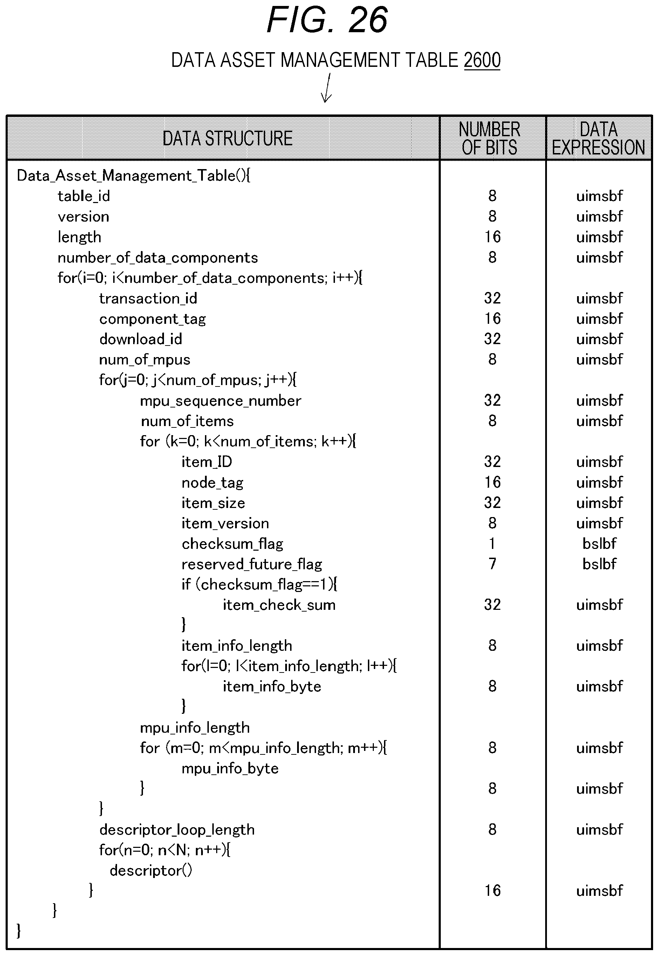

Fig. 26 illustrates a syntax example 2600 of a data asset management table (DAMT) transmitted via a data transmission message. The data asset management table is a table for managing the data broadcasting application in asset units and describes the configuration of MPUs in an asset and the version information of each MPU.

Table_id (table identification) is an 8-bit fixed value that indicates a data asset management table in various types of signaling information. Version (version) is an 8-bit integer parameter that indicates the version of this data asset management table. For example, when only a portion of the parameters that form the data asset management table are updated, the version is incremented by +1. Length is a 16-bit parameter that indicates the size of the data asset management table in byte units, the size being counted immediately after this field.

Number_of_data_components is an 8-bit parameter that indicates the number of data components included in the package (that is, the number of assets of the data broadcasting application). For example, two types of data components including a program-linked data broadcasting application and a program-nonlinked data broadcasting application may be transmitted via one package (broadcast program). A number of following data component (that is, asset) loops corresponding to the number indicated by number__of_data_components are disposed, and information of each data component is stored. Attribute information of a data component and information on the MPUs included in the data component are written in each data component loop.

The attribute information of the data component includes transaction_id (transaction identification information), component_tag, and download_id (download identification information) . The transaction_id is an identifier having the version function of the data component. The component_tag is a label for identifying a stream of the data component. The component_tag has the same value as the component_tag in the MH stream identification descriptor disposed as an asset descriptor in the MP table. The download_id serves as a label for uniquely identifying data content. The download identification information is written to the extension header of anMMTPpacket that transmits applications (non-timedmedia) as necessary (see Fig. 7).

Num_of_mpus indicates the number of MPUs included in the data component. Moreover, the attribute information of each MPU is stored in a number of MPU loops corresponding to the number indicated by num_of_mpus. MPU-sequence_number is a MPU sequence number allocated to the MPU. Num_of_items indicates the number of items included in the MPU (in other words, the number of pieces of file data transmitted via the MPU). Moreover, information on each item is stored in a number of item loops corresponding to the number indicated by num_of__items.

Attribute information of the item and information on the item are stored in one item loop. Item_id, node_tag, item_size, item_version, and item_checksum are stored as the attribute information of the item. The item_id is a 32-bit value for uniquely identifying items used for file transmission. The node_tag is a node tag corresponding to an item and is a 16-bit value for identifying the item. By using the 16-bit node_tag instead of the 32-bit item_id as the signaling information, it is possible to reduce the bit size necessary for identifying the item on the data transmission message. The item_size indicates the size of an item in byte units. The item_version indicates the version of the item and the version is incremented by +1 whenever the content of the item is updated. The item_checksum indicates the checksum of the item. Note that since an information amount of the checksum is too large if the checksum is set for all files, 1-bit check__sum_flag is set, and 32-bit item_check_sum is provided when "1" is set to the flag. Checksum_flag is a flag indicating whether a checksum is described, and the item_checksum is described when this flag is "1". Item_info_length indicates a byte length of a subsequent item information area, and information on the item is written to a series of areas made up of a number of loops corresponding to this byte count in byte units (item_info_byte).

Moreover, information on each MPU is stored in the MPU loop. Specifically, MPU_info_length indicates a byte length of a subsequent MPU information area, and information on the MPU is written to a series of areas made up of a number of loops corresponding to this byte count in byte units (item_info_byte).

Descriptor_loop_length indicates the total byte length of a descriptor. Descriptor stores information on a descriptor in a series of areas made up of a number of loops corresponding to the number indicated by descriptor_loop_length. The descriptor to be stored is defined separately.

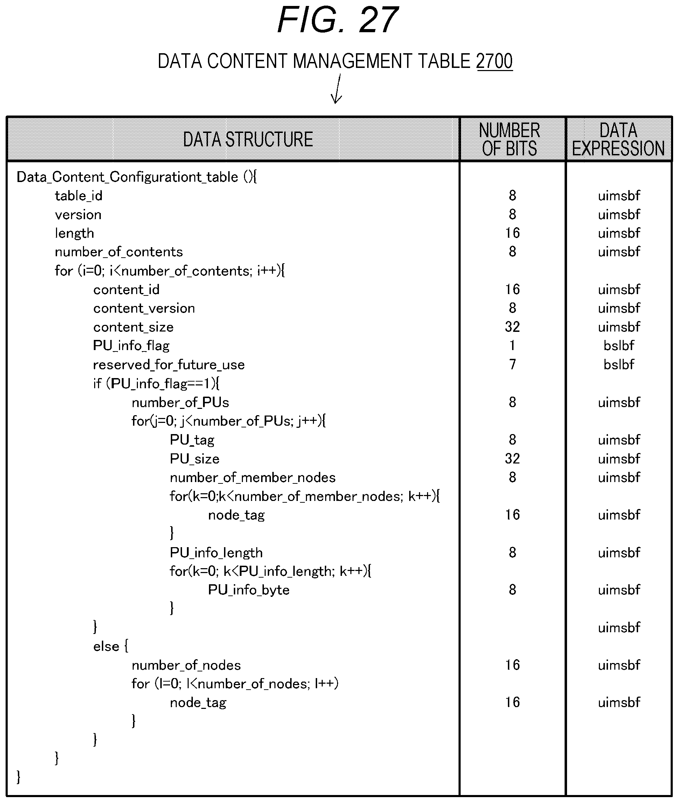

Fig. 27 illustrates a syntax example 2700 of a data content management table (DCCT) transmitted via a data transmission message. The data content management table is a table for managing the data broadcasting application in respective presentation units (PU). This table describes the configuration information of files of the data broadcasting application in presentation units (PU) of the data broadcasting.

Table_id (table identifier) is an 8-bit fixed value that indicates the data content management table in various types of signaling information. Version (version) is an 8-bit integer parameter that indicates the version of the data content management table. For example, when only a portion of the parameters that form the table is updated, the version is incremented by +1. Length is a 16-bit parameter that indicates the size of the data content management table in byte units, the size being counted immediately after this field.

Number_of_contents is an 8-bit parameter that indicates the number of data contents transmitted via a package (broadcast program). A number of following data content loops corresponding to the number indicated by number_of_contents are disposed, and information of each data content is stored.

In one data content loop, information on content_id, content_version, content_size, and a data broadcasting presentation unit (PU) included in the data content is written as information on the data content. The content_id (content identification information) is a label for uniquely identifying the data content. The content_version is an area in which the version number of the data content is written. The content_size is an area in which the size of the data content is written.

PU_info_flag indicates whether the data content management table is information on PU. Moreover, when PU_info_flag=1, the number of PUs included in the data content is written to the number_of_PUs, and subsequently thereto, a number of PU loops corresponding to the number indicated by the number_of_PUs are disposed.

In one PU loop, PU__tag which is identification information of PU, PU_size which is an area in which the size of PU is written, and number_of_member_nodes indicating the number of node designations of files or directories that form the PU are written. Moreover, node tags of the files or the directories that form the PU are written in a number of node loops corresponding to the number indicated by number_of_member_nodes.

Moreover, information on PU is written to one PU loop. Specifically, PU_info_length indicates the number of bytes of PU information, and the information on PU is written to a series of areas made up of a number of loops corresponding to the byte count in byte units (PU_info_byte).

On the other hand, when PU_info_flag=0 (that is, when the data content management table is not the information on PU), information on files or directories that form the data content is written. Specifically, number_of_nodes indicating the number of node designations of the files or the directories that form the data content is written. Moreover, node tags of the files and the directories that form the data content are written in a number of node loops corresponding to the number indicated by number_of_nodes.

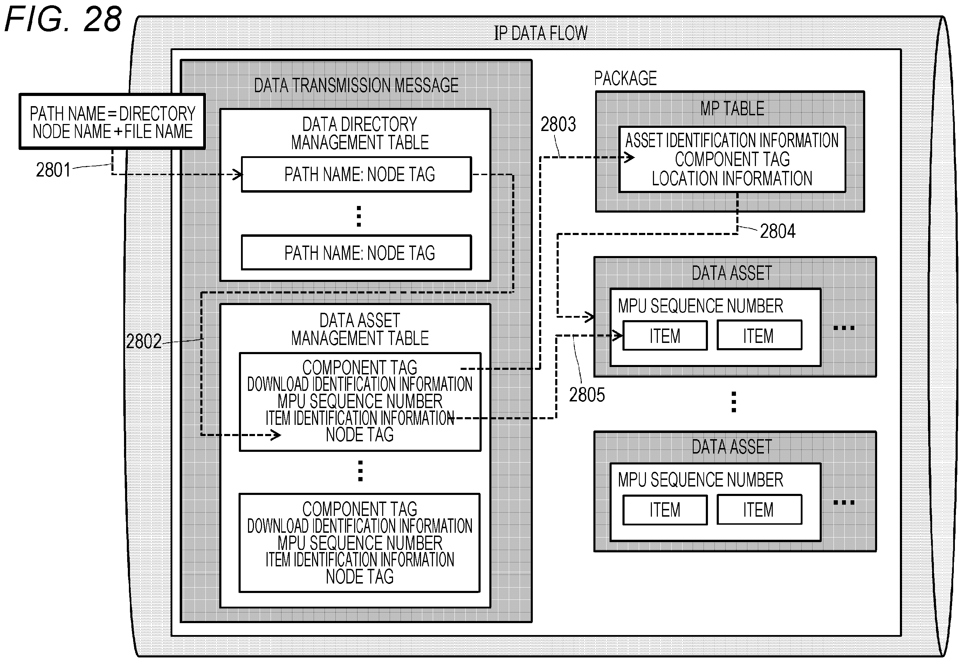

Fig. 28 illustrates a mechanism for acquiring items of the data broadcasting application multiplexed in the same IP data flow.

A path name is designated for a file that forms a data broadcasting application according to an application description such as HTML5. The path name mentioned herein is described using a combination of a directory node name and a file name. Moreover, a node tag is defined as a descriptor that integrates the directory node and the file and is used as information that links signaling tables.

The receiver can detect an application to be activated (for example, an application for which autostart is designated by an application control code) by referring to an application information loop in the MH-AIT transmitted via the M2 section message. Moreover, the receiver can acquire the location information (that is, the path name) of the data broadcasting application from a transmission protocol descriptor (to be described later) disposed in the MH-AIT. As indicated by reference numeral 2801, it is possible to obtain a node tag of a file having the designated path name from the data directory management table in the data transmission message.

Subsequently, as indicated by reference numeral 2802, it is possible to obtain a component tag, download identification information, an MPU sequence number, and item identification information of an asset via which the item having the node tag obtained in the data directory management table is transmitted from the data asset management table in the same data transmission message.

Furthermore, when the location information of the asset having the component tag obtained in the data asset management table is acquired from the MP table as indicated by reference numeral 2803, it is possible to specify the data asset via which the corresponding file is actually transmitted as indicated by reference numeral 2804.

Moreover, the units of repeated transmission of a file corresponding to a carousel can be uniquely identified from the specified data asset using the download identification information obtained from the data asset management table and the download identification information described in a header area of the MMTP packet via which the item is transmitted. As indicated by reference numeral 2805, it is possible to designate an item having the MPU sequence number and the item identification information obtained from the data asset management table among the repeatedly transmitted items as a desired file. The node tag is unique in the data transmission message, the MPU sequence number is unique in the asset (IP data flow), and the item identification information is unique in a service provider.

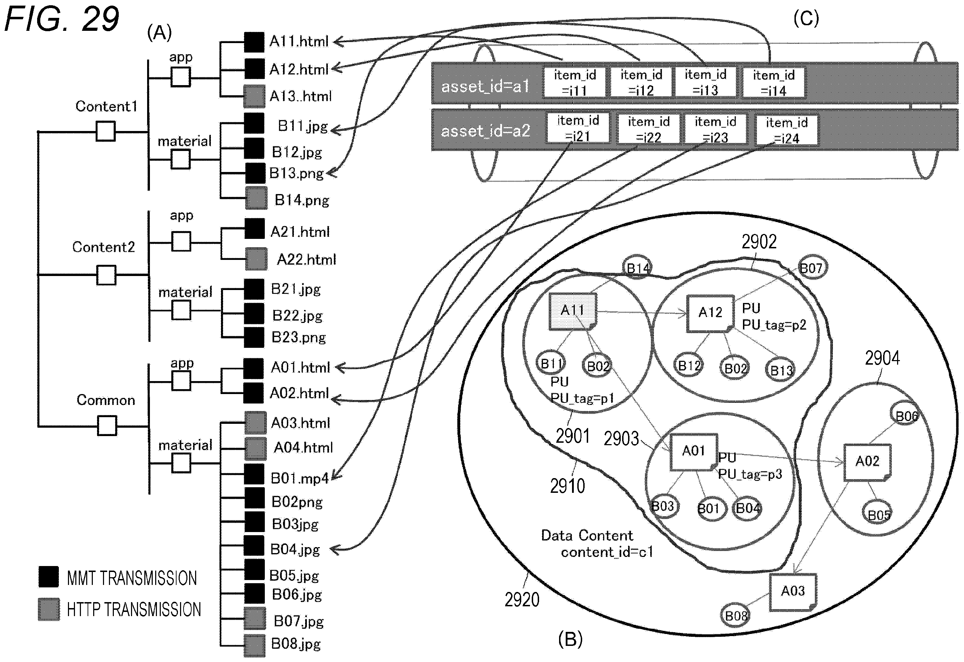

Figs. 29(A) to 29(c) illustrate a mechanism for transmission of the data broadcasting application (contents) transmitted according to the MMT scheme, the directory structure of the contents, and presentation of applications.

Fig. 29 (A) illustrates a directory structure of contents. Each of the contents content1, 2, ..., and so on includes file data of an application (app) and a material. The entity of each of the application and the material is file data. Each piece of the file data is transmitted using items which are constituent elements of an asset on the data asset, and the respective items can be identified by item identification information (item_id). As illustrated in Fig. 29(C), each file is transmitted as an item on the corresponding data asset. The application includes one or more HTML documents referred to during execution of contents (during presentation of the application). Moreover, the material is mono media (images, text, or the like) referred to from the HTML document. One HTML document and the material referred to therefrom form the presentation unit PU of the data broadcasting application. In the example illustrated in Fig. 29(A), one or more HTML-format applications such as A11.html, A12.html, and A13.html are included in the sub-directory "app" under the directory of content1. Among these applications, A11.html is a resource directly referred to during execution of contents. Moreover, mono media B11.jpg, B12.jpg, and B13.jpg referred to from the documents A11. html and A12.html are included in the sub-directory "material" under the directory of content1.

Fig. 29(B) illustrates a reference relation between applications during execution of contents (during presentation of applications). In the illustrated example, a presentation unit PU indicated by reference numeral 2901 includes an application A11 directly referred to during execution of contents and materials B11 and B02 referred to by the application, and p1 is allocated as PU_tag. Moreover, a presentation unit PU indicated by reference numeral 2902 includes an application A12 and materials B12, B02, and B13 referred to by the application, and p2 is allocated as PU_tag. Furthermore, a presentation unit PU indicated by reference numeral 2903 includes an application A01 and materials B03, B01, and B04 referred to by the application, and p3 is allocated as PU_tag.

Moreover, a plurality of HTML documents may have a link reference relation (as is widely known). In the example illustrated in Fig. 29(B) the application A11.html is a HTML document which is directly referred to during execution of contents and which describes a presentation screen displayed first. In contrast, the application A12.html included in the same directory as the content1 and the application A01.html included in the directory common outside the content1 are HTML documents that execute A11.html and describes a presentation screen that transitions from the presented screen and have a link reference relation with the A11.html. As described above, the applications A11.html, A12.html, and A01.html form presentation units PUs 2901, 2902, and 2903, respectively. Moreover, the presentation units 2901, 2902, and 2903 having a link relation form a higher link group 2910.

Furthermore, a larger group called data content is formed within the range of presentation units having the same content identification information (content_id). Data content generally corresponds to the entire linked application data of one broadcast program. In the example illustrated in Fig. 29(B), files of the applications and the materials included in the directories content1 and common form data content 2920 to which content identification information c1 is allocated. By searching the PU loop in the data content loop corresponding to the content identification information from the data content management table, it is possible to collectively specify all presentation units PUs included in the data content.

Fig. 29(C) schematically illustrates a state in which the data broadcasting application is transmitted according to the MMT scheme. In the MMT transmission scheme, each component included in the package is handled as one asset and asset identification information (asset_id) is allocated to eachasset. In the illustrated example, a1 and a2 are allocated to respective assets as the asset identification information. Moreover, each file data which is the constituent element of the content corresponds to an item which is a constituent element of the asset on the data asset. That is, individual pieces of file data such as a HTML document and a material (images, text, and the like) are basically transmitted using one item, and item identification information (item_id) is allocated to each item. In the illustrated example, i11, i12, i13, and i14 are allocated to the respective items used for transmission of the respective pieces of file data included in the directory content1 as the item identification information. Items included in the same component share the same asset identification information and are transmitted on the same data asset. In the illustrated example, the respective items having the item identification information of i11, i12, i13, and i14 share the same asset identification information a1 and are transmitted as the same data asset.

### First Embodiment

In a first embodiment, the MPU as a transmission unit of the data broadcasting application is positioned in the presentation unit PU of the data broadcasting application, whereby the broadcast service is operated efficiently.

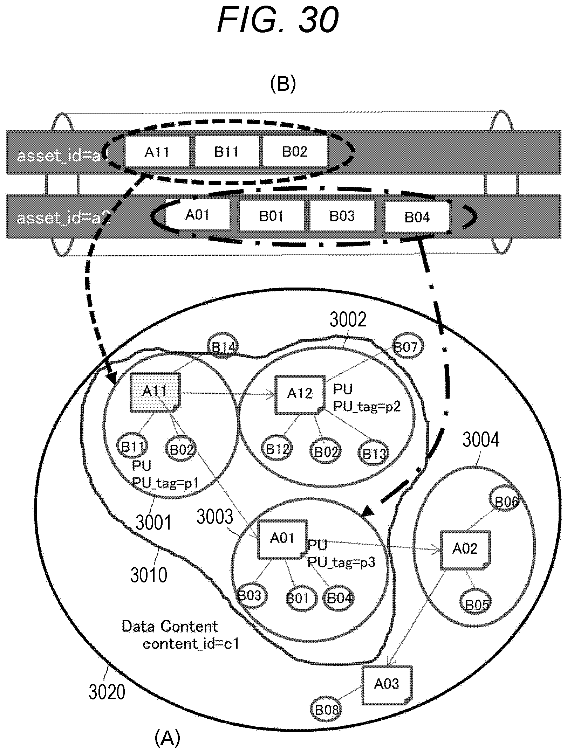

Figs. 30 (A) and 30 (B) illustrate a correlation between transmission of the data broadcasting application (contents) transmitted according to the MMT scheme and the application presentation unit (when an MPU is positioned in a PU).

Fig. 30(A) illustrates a reference relation between applications during execution of contents (during presentation of applications). In the illustrated example, a presentation unit PU indicated by reference numeral 3001 includes an application A11 directly referred to during execution of contents and materials B11 and B02 referred to by the application, and p1 is allocated as PU_tag. Moreover, a presentation unit PU indicated by reference numeral 3002 includes an application A12 referred to from the application A11 and materials B12, B02, and B13 referred to by the application A12, and p2 is allocated as PU_tag. Furthermore, a presentation unit PU indicated by reference numeral 3003 includes an application A01 referred to from the application A11 and materials B03, B01, and B04 referred to by the application A01, and p3 is allocated as PU_tag. Moreover, a presentation unit PU indicated by reference numeral 3004 includes an application A02 referred to from the application A01 and materials B05 and B06 referred to by the application A02. Moreover, an application A03 referred to from the application A02 refers to a material B08.

Moreover, the presentation units 3001, 3002, and 3003 having a link relation form a higher link group 3010. Furthermore, a larger group called data content is formed within the range of presentation units having the same content identification information (content_id). In the example illustrated in Fig. 30(A), applications included in the directories content1 and common form data content 3020 to which content identification information c1 is allocated.

Moreover, Fig. 30 (B) schematically illustrates a state in which a data broadcasting application having such a link relation as illustrated in Fig. 30 (A) is transmitted according to the MMT scheme. Each file data which is the constituent element of the content is transmitted via an MFU which is an element that forms coded signals in the MMT. Moreover, each MFU corresponds to an item which is a constituent element of an asset, and item identification information is allocated to each item. Moreover, in the MMT transmission scheme, each component included in the package is handled as one asset and asset identification information (asset_id) is allocated to each asset. Moreover, an MPU sequence number for uniquely identifying MPUs in the component (on the same data asset) is allocated to each MPU. The same MPU sequence number is described in the MMTP payload header appended to each MFU that forms the MPU.

In the present embodiment, the MPU as a transmission unit of the data broadcasting application is configured for each group of MFUs corresponding to the file data that forms the presentation unit PU of the data broadcasting application. In the example illustrated in Fig. 30(A), a group of MFUs corresponding to the files A11, B11, and B02 that form the presentation unit 3001 of which the PU_tag is p1 forms one MPU. Then, as illustrated in Fig. 30(B), the MPU positioned in the presentation unit 3001 of which the PU_tag is p1 is transmitted via a data asset identified by the asset identification information a1.

Similarly, in the example illustrated in Fig. 30(A), a group of MFUs corresponding to the files A01, B01, B03, and B04 that form the presentation unit 3003 of which the PU_tag is p3 forms another MPU. Moreover, as illustrated in Fig. 30(B), the MPU positioned in the presentation unit 3001 of which the PU_tag is p3 is transmitted via a data asset identified by the asset identification information a2.

In the first embodiment, the transmission unit MPU of the data broadcasting application corresponding to the presentation units PU of the data broadcasting application can be designated using the data content management table, for example.

The configuration of the data content management table itself has been described with reference to Fig. 27. In the data content management table, the information on PU can be stored for each presentation unit PU that forms the data content. Specifically, PU_info_length indicates a byte length of a subsequent MPU information area, and information on the MPU is written to a series of areas made up of a number of loops corresponding to this byte count in byte units (PU_info_byte). In the present embodiment, a mapping descriptor (PU_MPU_mapping_descriptor) from PU to MPU is disposed using the PU_info_byte.

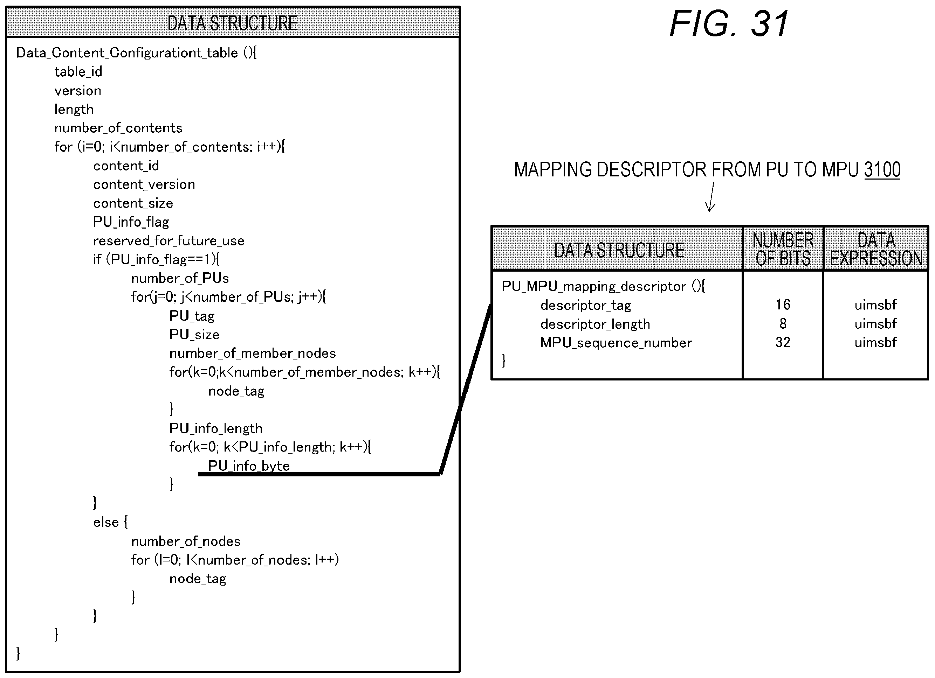

Fig. 31 illustrates a syntax example 3100 of the mapping descriptor (PU_MPU_mapping_descriptor) from the presentation unit PU to the MPU as the transmission unit.

Descriptor_tag is an 8-bit integer value for identifying the descriptor 3100. Descriptor_length is an area in which a byte length of the data of the descriptor 3100 subsequent to this field is written. Moreover, a MPU sequence number allocated to the MPU corresponding to the PU is described in MPU_sequence_number. In this case, the description of a number of node_tag corresponding to the number indicated by number_of_member_nodes disposed immediately before PU_info_length may be omitted by setting number_of_member_nodes=0, for example, rather than disposing the descriptor. This is because the similar information is transmitted via the MPU loop in the data asset management table . In this way, it is possible to reduce the descriptors of the data content management table.

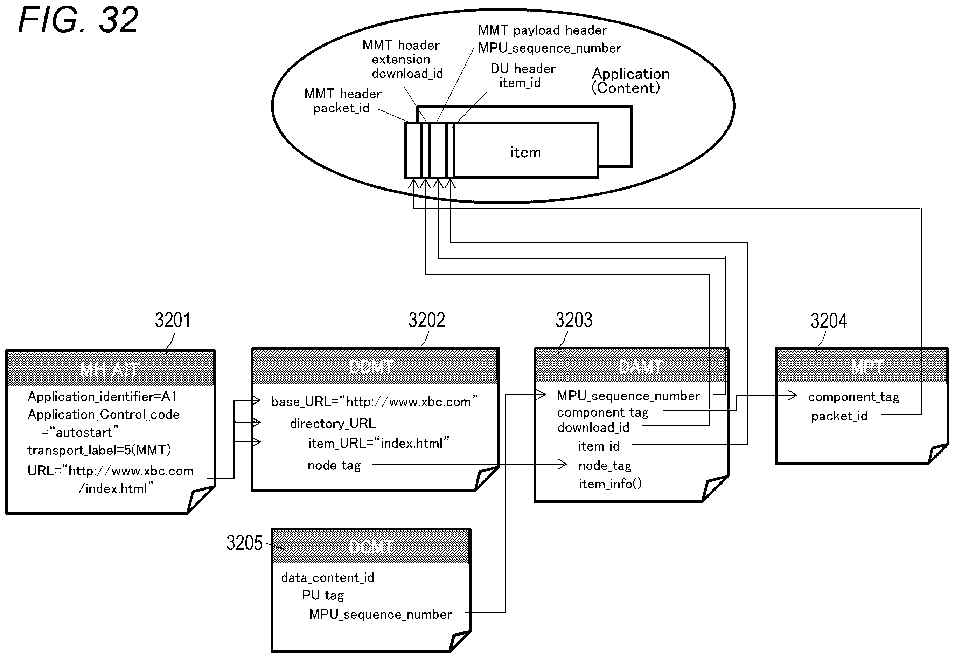

Fig. 32 illustrates a reference relation of signaling tables transmitted as signaling information when the data broadcasting application is acquired from the data asset (when an MPU is positioned in a PU). However, it is assumed that the data content management table follows the syntax example illustrated in Fig. 31.

Upon acquiring an MH-AI table (MH AIT) 3201 via the M2 section message, the receiver 12 checks an application state by referring to application_control_code. Moreover, when it is instructed to perform "autostart" (activation of the application) and it is confirmed that MMT transmission is designated by referring to transport_protocol_label in the table 3201, the URL information of an item (file data) directly referred to during presentation of the application is extracted from the transmission protocol descriptor. Moreover, the receiver 12 acquires node_tag of an item of which all character strings of base_URL, directory_URL, and item_URL are identical by referring to a data directory management table (DDMT) 3202 transmitted via the data transmission message.

Subsequently, the receiver 12 finds an item having the node_tag acquired from the data directory management table 3202 from an item loop included in an MPU loop in the data component loop by referring to the data asset management table (DAMT) 3203 transmitted via the data transmission message and acquires an MPU sequence number for uniquely identifying the MPU that transmits the item and asset attribute information such as a component tag (component_tag) and download identification information (download_id) of assets (components) to which the item belongs.

Furthermore, the receiver 12 finds an MH stream identification descriptor having the same value as the component tag acquired from the data asset management table 3203 by referring to an MP table (MPT) 3204 transmitted via the PA message and acquires packet identification information (packet_id) corresponding to the asset (component) from the descriptor.

Moreover, the receiver 12 can filter, on the data asset (IP data flow), a packet in which the packet identification information acquired via the MP table 3204 is included in the MMTP header and the download identification information, the MPU sequence number, and the item identification information acquired from the data asset management table 3203 are included in the extension header, the MMTP payload header, and the DU header of the MMTP header, respectively, and extract an MFU that transmits file data of an application which is instructed to perform "autostart" (activation of the application).

Moreover, the receiver 12 checks whether a presentation unit PU having a mapping descriptor from a PU in which the MPU sequence number acquired from the data asset management table 3203 is described to an MPU is present by referring to the data content management table (DCCT) 3205 transmitted via the data transmission message. When the descriptor is found, it is known that the MPU is correlated with the presentation unit PU. Therefore, when the screen of the presentation unit is to be displayed, all MFUs (items) having the same MPU sequence number may be acquired.

Moreover, as a modification of the first embodiment, the presentation unit PU of the data broadcasting application corresponding to each transmission unit MPU of the data broadcasting application may be designated using a data asset management table, for example.

The configuration of the data asset management table itself has been described with reference to Fig. 28. In the data asset management table, information of the MPU can be stored for each MPU that forms the data component. Specifically, MPU_info_length indicates a byte length of a subsequent MPU information area, and information on the MPU is written to a series of areas made up of a number of loops corresponding to this byte count in byte units (item_info_byte). In the present embodiment, two descriptors including a PU information descriptor (PU_info_descriptor) of a PU corresponding to the MPU and a linked PU information descriptor (Linked_PU_descriptor) of the PU referred to from the PU are disposed using the MPU_info_byte.

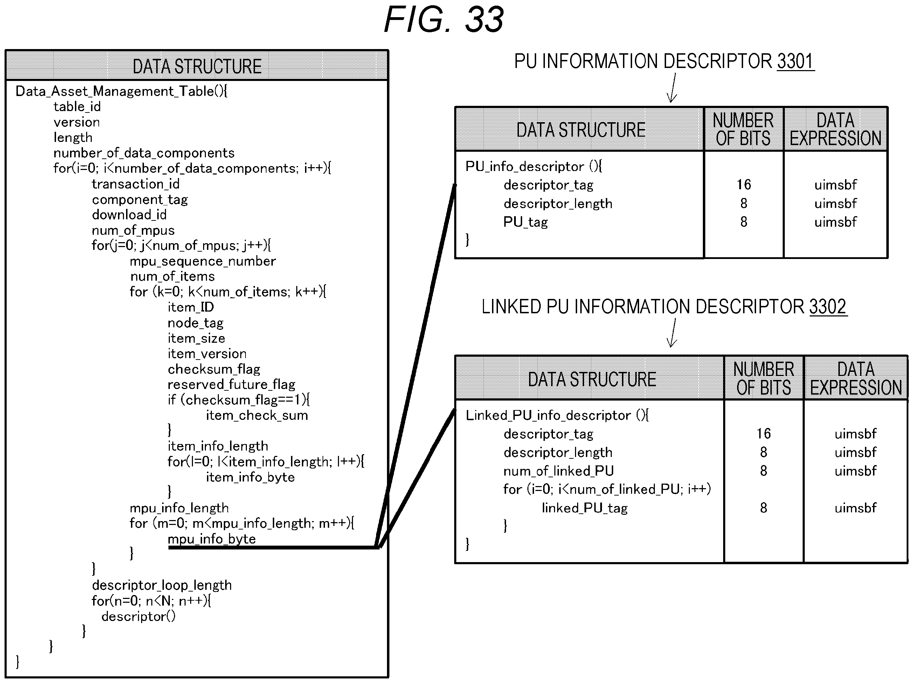

Fig. 33 illustrates syntax examples 3301 and 3302 of the PU information descriptor (PU_info_descriptor) and the linked PU information descriptor (Linked_PU_descriptor).

Descriptor_tag of the PU information descriptor 3301 is an 8-bit integer value for identifying the PU information descriptor 3301. Descriptor_length is an area in which a byte length of the data of the descriptor 3301 subsequent to this field is written. Moreover, the PU_tag for identifying the presentation unit PU corresponding to the MPU appears in PU_tag.

Moreover, descriptor_tag of the PU information descriptor 3302 is an 8-bit integer value for identifying the PU information descriptor 3302. Descriptor_length is an area in which a byte length of the data of the descriptor 3302 subsequent to this field is written. Num_of_linked_PU indicates the number of presentation units (Linked_PU) in a reference relation with the presentation unit PU corresponding to the MPU. Moreover, a tag (linked_PU_tag) for identifying the presentation units PU which are in a reference relation with the PU appears in a number of loops corresponding to the number indicated by num_of_linked_PU.

A broadcast service in which some MPUs only rather than all MPUs are correlated with the presentation unit PU of the data broadcasting application may be operated. However, if it is assumed that all MPUs are positioned in the presentation unit PU, the data asset management table can also serve as the data content management table, and transmission of the data content management table via the data transmissionmessage can be omitted completely.

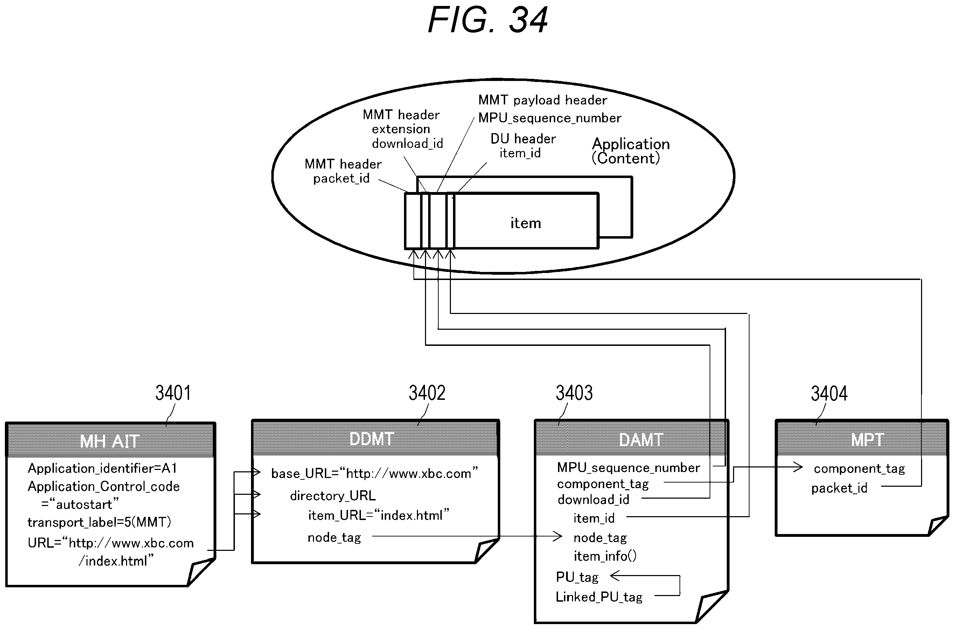

Fig. 34 illustrates a reference relation of signaling tables transmitted as signaling information when the data broadcasting application is acquired from the data asset (when an MPU is positioned in a PU). However, it is assumed that the data asset management table follows the syntax example illustrated in Fig. 33.

Upon acquiring an MH-AI table (MH AIT) 3401 via the M2 section message, the receiver 12 checks an application state by referring to application_control_code. Moreover, when it is instructed to perform "autostart" (activation of the application) and it is confirmed that MMT transmission is designated by referring to transport_protocol_label in the table 3401, the URL information of an item (file data) directly referred to duringpresentation of the application is extracted from the transmission protocol descriptor. Moreover, the receiver 12 acquires node_tag of an item of which all character strings of base_URL, directory_URL, and item_URL are identical by referring to a data directory management table (DDMT) 3402 transmitted via the data transmission message.

Subsequently, the receiver 12 finds an item having the node_tag acquired from the data directory management table 3402 from an item loop included in an MPU loop in the data component loop by referring to the data asset management table (DAMT) 3403 transmitted via the data transmission message and acquires an MPU sequence number for uniquely identifying the MPU that transmits the item and asset attribute information such as a component tag (component_tag) and download identification information (download_id) of assets (components) to which the item belongs.

Furthermore, the receiver 12 finds an MH stream identification descriptor having the same value as the component tag acquired from the data asset management table 3403 by referring to an MP table (MPT) 3204 transmitted via the PA message and acquires packet identification information (packet_id) corresponding to the asset (component) from the descriptor.

Moreover, the receiver 12 can filter, on the data asset (IP data flow), a packet in which the packet identification information acquired via the MP table 3404 is included in the MMTP header and the download identification information, the MPU sequence number, and the item identification information acquired from the data asset management table 3403 are included in the extension header, the MMTP payload header, and the DU header of the MMTP header, respectively, and extract an MFU that transmits file data of an application which is instructed to perform "autostart" (activation of the application).

Moreover, the receiver 12 specifies a presentation unit PU which is in a link reference relation with the presentation unit PU corresponding to the MPU by referring to the Linked_PU information descriptor in the corresponding MPU loop in the data asset management table 3403. In this way, the receiver 12 can acquire the MPU sequence number correlated with the link destination presentation units PU and predict the items of the link destination presentation units according to a similar procedure (in this case, it is assumed that all MPUs are positioned in the presentation unit PU).

### Second Embodiment

In a second embodiment, the MPU as a transmission unit of the data broadcasting application is positioned in the production unit (called a directory) of the data broadcasting application, whereby the broadcast service is operated efficiently.

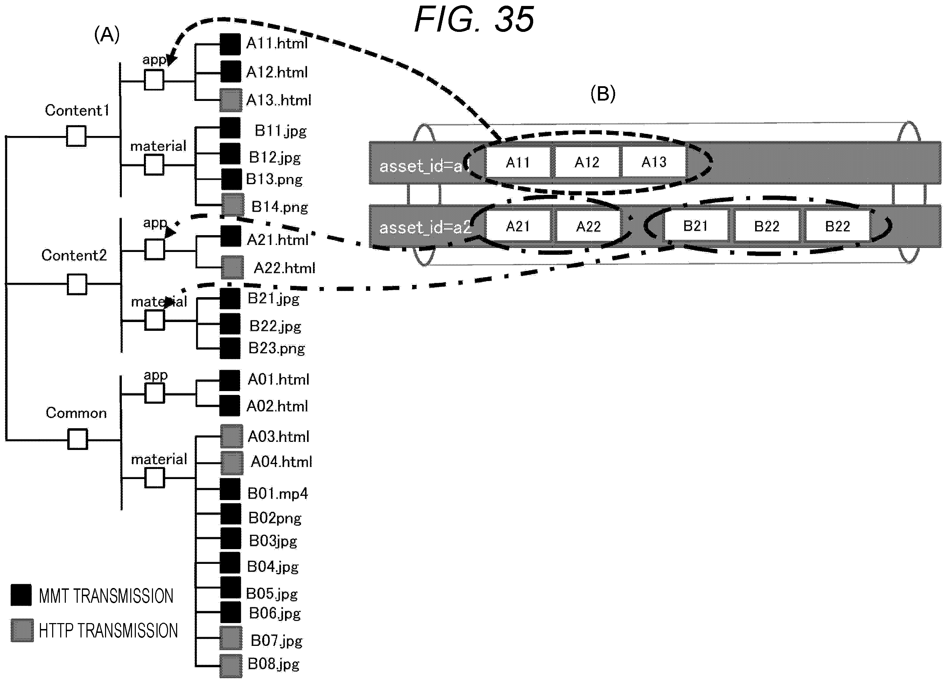

Figs. 35 (A) and 35 (B) illustrate a correlation between transmission of the data broadcasting application (contents) transmitted according to the MMT scheme and the content directory structure (when an MPU is positioned in a directory structure).

Fig. 35 (A) illustrates a directory structure of contents. Each of the contents content1, 2, ..., and so on includes file data of an application (app) and a material. The entity of each of the application and the material is file data. Each piece of the file data is transmitted using items which are constituent elements of an asset on the data asset, and the respective items can be identified by item identification information (item_id).

Moreover, Fig. 35 (B) schematically illustrates a state in which the data broadcasting application is transmitted according to the MMT scheme. Each file data which is a minimum unit of the directory structure is transmitted using an MFU which is an element that forms coded signals in the MMT. Moreover, eachMFU corresponds to an item which is a constituent element of an asset, and item identification information is allocated to each item. Moreover, in the MMT transmission scheme, each component included in the package is handled as one asset and asset identification information (asset_id) is allocated to each asset. Moreover, an MPU sequence number for uniquely identifying MPUs in the component (on the same data asset) is allocated to each MPU. The same MPU sequence number is described in the MMTP payload header appended to each MFU that forms the MPU. In the illustrated example, a1 and a2 are allocated to respective assets as the asset identification information. Moreover, each file data which is the constituent element of contents is transmitted using an MFU which is the constituent element of the coded signals in the MMT as an item which is a constituent element of the asset on the data asset.

In the present embodiment, the MPU as a transmission unit of the data broadcasting application is configured for each group of MFUs corresponding to the file data that forms the directory called an application and a material included in each data content. In the example illustrated in Fig. 35 (A), a group of MFUs corresponding to the files A11, A12, and A13 that form the application directory of the data content Content1 forms on MPU. Moreover, as illustrated in Fig. 35 (B), the MPU made up of the group of MFUs corresponding to the files A11, A12, and A13 is transmitted via the data asset identified by the asset identification information a1.

Similarly, in the example illustrated in Fig. 35(A), a group of MFUs corresponding to the files A21 and A22 that form an application directory of the data content Content2 forms one MPU, and a group of MFUs corresponding to the files B21, B22, and B23 that form a material directory forms one MPU. Moreover, as illustrated in Fig. 35(B), the MPUs corresponding to the directories included in the data content Content2 are transmitted via the data asset identified by the asset identification information a2.

In the second embodiment, a set (directory) of files corresponding to the transmission units MPUs of the data broadcasting application can be designated using the data asset management table, for example.

The configuration of the data asset management table itself has been described with reference to Fig. 28. In the data asset management table, information of the MPU can be stored for each MPU that forms the data component. Specifically, MPU_info_length indicates a byte length of a subsequent MPU information area, and information on the MPU is written to a series of areas made up of a number of loops corresponding to this byte count in byte units (item_info_byte). In the present embodiment, an MPU node descriptor (MPU_node_descriptor) indicating the node (the node corresponds to a file or a directory which is a set of files) corresponding to the MPU is disposed using the MPU_info_byte.

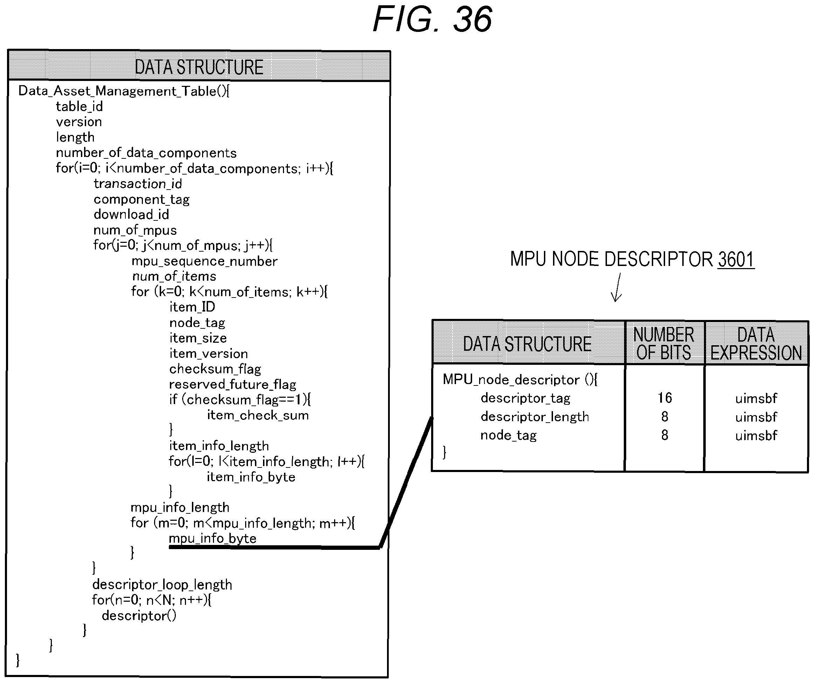

Fig. 36 illustrates a syntax example 3600 of the MPU node descriptor (MPU_node_descriptor).

Descriptor_tag is an 8-bit integer value for identifying the descriptor 3600. Descriptor_length is an area in which a byte length of the data of the descriptor 3600 subsequent to this field is written. Moreover, the node tag for identifying the node (directory) corresponding to the MPU appears in node_tag.

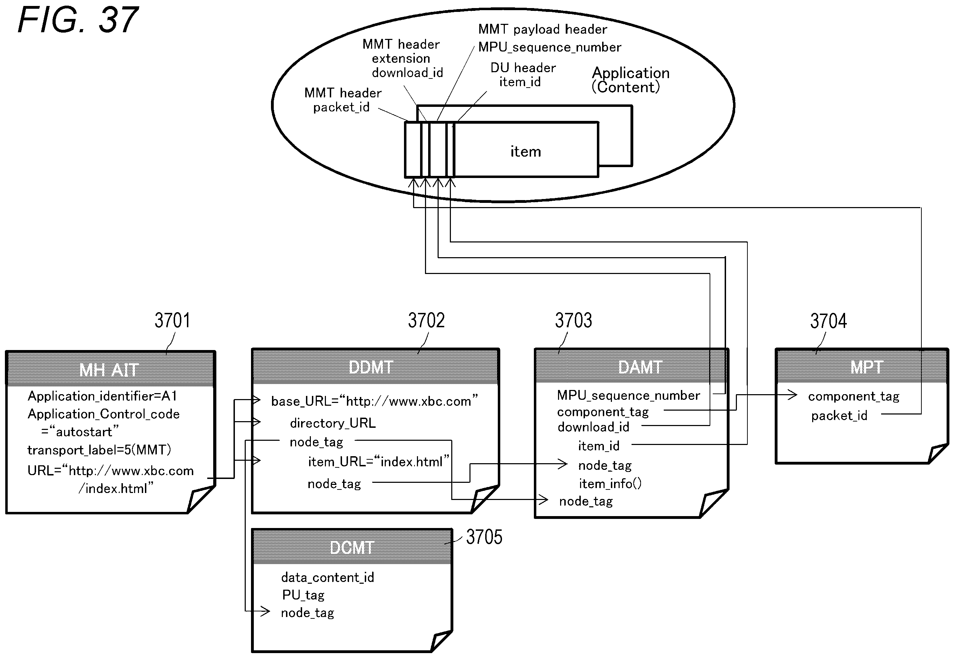

Fig. 37 illustrates a reference relation of signaling tables transmitted as signaling information when the data broadcasting application is acquired from the data asset (when an MPU is positioned in a data structure). However, it is assumed that the data asset management table follows the syntax example illustrated in Fig. 36.

Upon acquiring an MH-AI table (MH AIT) 3701 via the M2 section message, the receiver 12 checks an application state by referring to application_control__code. Moreover, when it is instructed to perform "autostart" (activation of the application) and it is confirmed that MMT transmission is designated by referring to transport_protocol_label in the table 3701, the URL information of an item (file data) directly referred to during presentation of the application is extracted from the transmission protocol descriptor. Moreover, the receiver 12 acquires node_tag of an item of which all character strings of base_URL, directory_URL, and item_URL are identical by referring to a data directory management table (DDMT) 3702 transmitted via the data transmission message.

Subsequently, the receiver 12 finds an item having the node_tag acquired from the data directory management table 3702 from an item loop included in an MPU loop in the data component loop by referring to the data asset management table (DAMT) 3703 transmitted via the data transmission message and acquires an MPU sequence number for uniquely identifying the MPU that transmits the item and asset attribute information such as a component tag (component_tag) and download identification information (download_id) of assets (components) to which the item belongs.

Moreover, the receiver 12 can search the same value as the node tag of the directory indicated by the directory node loop of the data directory management table 3702 from the MPU loop of the data asset management table 3703 to acquire the MPU sequence number of the MPU corresponding to the directory.

Furthermore, the receiver 12 finds an MH stream identification descriptor having the same value as the component tag acquired from the data asset management table 3703 by referring to an MP table (MPT) 3704 transmitted via the PA message and acquires packet identification information (packet_id) corresponding to the asset (component) from the descriptor.

Moreover, the receiver 12 can filter, on the data asset (IP data flow), a packet in which the packet identification information acquired via the MP table 3704 is included in the MMTP header and the download identification information, the MPU sequence number, and the item identification information acquired from the data asset management table 3703 are included in the extension header, the MMTP payload header, and the DU header of the MMTP header, respectively, and extract an MFU that transmits file data of an application which is instructed to perform "autostart" (activation of the application).

Moreover, the receiver 12 searches the MPU node descriptor (MPU_node_descriptor) having the same value as the node tag of the directory indicated by the directory node loop of the data directory management table 3702 from the MPU loop of the data asset management table 3703. In this way, the receiver 12 can specify the MPU correlated with the directory.

Moreover, upon acquiring the node tag of the directory to which the corresponding item belongs from the data directory management table 3702, the receiver 12 can find the presentation unit PU corresponding to the node tag from the PU loop in the data content management table 3705.

As described above, according to the technology disclosed in the present specification, it is possible to efficiently operate the broadcast service by positioning the transmission unit (MPU) of the data broadcasting application in the presentation unit of the data broadcasting application or the production unit of the data broadcasting application.

### INDUSTRIAL APPLICABILITY

Hereinabove, the technology disclosed in the present specification has been described in detail with reference to the specific embodiments. However, it is obvious that modifications and substitutions can be made to the embodiments by those skilled in the art without departing from the gist of the technology disclosed in the present specification.

The technology disclosed in the present specification can be applied to various broadcasting systems which employs the MMT as a transport scheme. Moreover, the technology disclosed in the present specification can be applied to various data broadcasting systems in which items used in data broadcasting linked to a broadcast program are transmitted in predetermined transmission units (MPUs).

In short, the technology disclosed in the present specification has been described as an illustrative embodiment, and the details described in the present specification should not be construed as limiting. To determine the gist of the technology disclosed in the present specification, the scope of claims should be considered.

Note that the technology disclosed in the present specification may take the configuration as follows.
(1) A transmitting device including:
   a transmitting unit that transmits components that form a broadcast service in transmission units based on a predetermined transport scheme; and
   an information transmitting unit that transmits control information related to transmission of the components, wherein
   the transmitting unit transmits files that form a data broadcasting application by grouping the files into the transmission units based on the predetermined transport scheme, and
   the information transmitting unit transmits control information including a table that indicates positioning of the transmission units in the data broadcasting application.
(2) The transmitting device according to (1), wherein the predetermined transport scheme is MMT.
(3) The transmitting device according to (1), wherein
   the transmitting unit transmits the files that form the data broadcasting application using the transmission units grouped on the basis of presentation units, and
   the information transmitting unit transmits control information including a table that indicates a correlation between the transmission units and the presentation units of the data broadcasting application.
(4) The transmitting device according to (3), wherein
   the information transmitting unit stores and transmits a descriptor that correlates the presentation units with the transmission units in a first table that indicates information on the presentation units of the data broadcasting application.
(5) The transmitting device according to (3), wherein
   the information transmitting unit stores and transmits a descriptor that correlates the transmission units with the presentation units in a second table that indicates information on transmission units for transmitting the components.
(6) The transmitting device according to (1), wherein
   the files that form the data broadcasting application has a directory structure,
   the transmitting unit transmits the files that form the data broadcasting application using the transmission units grouped on the basis of the directory structure, and
   the information transmitting unit transmits control information including a table that indicates a correlation between the transmission units and the directory structure.
(7) The transmitting device according to (6), wherein
   the information transmitting unit stores and transmits a descriptor that correlates the transmission units with the directory structure in a second table that indicates information on the transmission units for transmitting the components.
(8) A transmitting method including:
   a transmitting step of transmitting components that form a broadcast service in transmission units based on a predetermined transport scheme; and
   an information transmitting step of transmitting control information related to transmission of the components, wherein
   the transmitting step involves transmitting files that form a data broadcasting application by grouping the files into the transmission units based on the predetermined transport scheme, and
   the information transmitting step involves transmitting the control information including a table that indicates positioning of the transmission units in the data broadcasting application.
(9) A receiving device including:
   a receiving unit that receives components that form a broadcast service using transmission units based on a predetermined transport scheme; and
   an information receiving unit that receives control information related to transmission of the components, wherein
   the receiving unit receives files that form a data broadcasting application using transmission units grouped on the basis of the predetermined transport scheme, and
   the information receiving unit receives control information including a table that indicates positioning of the transmission units in the data broadcasting application.
(10) A receiving method including:
   a receiving step of receiving components that form a broadcast service using transmission units based on a predetermined transport scheme; and
   an information receiving step of receiving control information related to transmission of the components, wherein
   the receiving step involves receiving files that form a data broadcasting application using transmission units grouped on the basis of the predetermined transport scheme, and
   the information receiving step involves receiving control information including a table that indicates positioning of the transmission units in the data broadcasting application.

### REFERENCE SIGNS LIST

- 10: Digital broadcasting system
- 11: Broadcast transmission system
- 12: Receiver
- 301: Clock unit
- 302: Signal transmitting unit
- 303: Video encoder
- 304: Audio encoder
- 305: Caption encoder
- 306: Signaling encoder
- 307: File encoder
- 308: EDPS
- 309: TLV signaling encoder
- 310: IP service multiplexer
- 311: TLV multiplexer
- 312: Modulation and transmission unit
- 401: Tuner/demodulation unit
- 402: Demultiplexer
- 402-1: TLV filter
- 402-2: IP filter
- 402-3: UDP filter
- 402-4: MMT filter
- 402-5: SI filter
- 403: Clock recovery unit
- 404: Video decoder
- 405: Audio decoder
- 406: Caption decoder
- 407: System control unit
- 408: Application control unit
- 409: Data broadcasting application engine
- 410: IP interface
- 411: Composition unit

## Claims

1. A transmitting device comprising:
a transmitting unit that transmits components that form a broadcast service in transmission units based on a predetermined transport scheme; and
an information transmitting unit that transmits control information related to transmission of the components, wherein
the transmitting unit transmits files that form a data broadcasting application by grouping the files into the transmission units based on the predetermined transport scheme, and
the information transmitting unit transmits control information including a table that indicates positioning of the transmission units in the data broadcasting application.

2. The transmitting device according to claim 1, wherein
the predetermined transport scheme is MPEG Media Transport (MMT).

3. The transmitting device according to claim 1, wherein
the transmitting unit transmits the files that form the data broadcasting application using the transmission units grouped on the basis of presentation units, and
the information transmitting unit transmits control information including a table that indicates a correlation between the transmission units and the presentation units of the data broadcasting application.

4. The transmitting device according to claim 3, wherein
the information transmitting unit stores and transmits a descriptor that correlates the presentation units with the transmission units in a first table that indicates information on the present at ion units of the databroadcasting application.

5. The transmitting device according to claim 3, wherein
the information transmitting unit stores and transmits a descriptor that correlates the transmission units with the presentation units in a second table that indicates information on transmission units for transmitting the components.

6. The transmitting device according to claim 1, wherein
the files that form the data broadcasting application has a directory structure,
the transmitting unit transmits the files that form the data broadcasting application using the transmission units grouped on the basis of the directory structure, and
the information transmitting unit transmits control information including a table that indicates a correlation between the transmission units and the directory structure.

7. The transmitting device according to claim 6, wherein
the information transmitting unit stores and transmits a descriptor that correlates the transmission units with the directory structure in a second table that indicates information on the transmission units for transmitting the components.

8. A transmitting method comprising:
a transmitting step of transmitting components that form a broadcast service in transmission units based on a predetermined transport scheme; and
an information transmitting step of transmitting control information related to transmission of the components, wherein
the transmitting step involves transmitting files that form a data broadcasting application by grouping the files into the transmission units based on the predetermined transport scheme, and
the information transmitting step involves transmitting the control information including a table that indicates positioning of the transmission units in the data broadcasting application.

9. A receiving device comprising:
a receiving unit that receives components that form a broadcast service using transmission units based on a predetermined transport scheme; and
an information receiving unit that receives control information related to transmission of the components, wherein
the receiving unit receives files that form a data broadcasting application using transmission units grouped on the basis of the predetermined transport scheme, and
the information receiving unit receives control information including a table that indicates positioning of the transmission units in the data broadcasting application.

10. A receiving method comprising:
a receiving step of receiving components that form a broadcast service using transmission units based on a predetermined transport scheme; and
an information receiving step of receiving control information related to transmission of the components, wherein
the receiving step involves receiving files that form a data broadcasting application using transmission units grouped on the basis of the predetermined transport scheme, and
the information receiving step involves receiving control information including a table that indicates positioning of the transmission units in the data broadcasting application.
